# EUROPEAN PATENT APPLICATION

(11) **EP 1 110 966 A2**
(43) Date of publication of application: **27.06.2001**
(21) Application number: 00204702.5
(22) Date of filing: 21.12.2000
(51) Int. Cl.: C07F 7/18, C09K 9/02

(54) **Silyl-carbamate photochromatic compounds process for their preparation and their use in polymeric materials**

(30) Priority: 22.12.1999 IT MI992681
(71) Applicant: Great Lakes Chemical (Europe) GmbH, 8500 Frauenfeld (CH)
(72) Inventor: Malatesta, Vicenzo, 20090 San Maurizio Al Lambro, Milan (IT); Giroldini, William, 20097 San Donato Milanese, Milan (IT); Crisci, Luciana, 26813 Graffignana, Lodi (IT); Wis, Maria Lucia, 20122 Milan (IT); Colombo, Rosalba, 20059 Vimercate, Milan (IT)
(74) Representative: De Gregori, Antonella

(57) **Abstract**

Silyl-carbamate photochromatic compounds having general formula (I) :

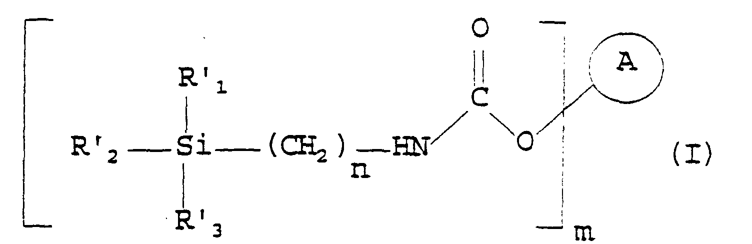

The above photochromatic compounds can be used in polymeric materials, obtaining photochromatic articles.

## Description

The present invention relates to silyl-carbamate photochromatic compounds.

More specifically, the present invention relates to silyl-carbamate photochromatic compounds belonging to the groups of spiro-indolino-naphtho-oxazines, spiro-iso-indolino-naphtho-oxazines, spiro-pyrans and chromenes, a process for their preparation and their use in polymeric materials.

A further object of the present invention relates to polymeric compositions containing said photochromatic compounds and the photochromatic articles obtained from their processing.

Photochromatic compounds are substances which have the characteristic of reversibly changing colour and/or degree of light transmission when exposed to solar or artificial light in the band ranging from UV to visible, or to some types of electromagnetic radiation, returning to their original state of colour and transmission when the initial light source is removed.

There are numerous substances with photochromatic characteristics, which belong to various groups of both organic and inorganic compounds such as, for example, those described in the texts "Photochromism", by G.H. Brown (Ed.), Vol. III of the Weissberger series "Techniques of Organic Chemistry", Wiley Interscience, New York (1971) and in "Photochromism: Molecules and Systems", by H. Dürr and H. Bouas-Laurent (Ed.), Vol. 40 of the series "Studies in Organic Chemistry" Elsevier (1990).

Among organic photochromatic compounds, those belonging to the groups of spiro-indolino-oxazines, spiro-pyrans and chromenes, are particularly known and used.

The above compounds are capable of giving photochromatic characteristics to polymeric organic materials used, for example, in the production of photochromatic lenses for eye-glasses, special inks, toys, and in many other applications.

As an example, the following patents can be mentioned: USA 3,562,172, USA 3,578,602, USA 4,215,010, USA 4,342,668, USA 5,055,576, USA 5,110,922, USA 5,186,867, EP 146,135, EP 134,633, EP 141,407, EP 245,020, EP 0315,224 and IT 1,238,694.

Japanese patent applications JP 04/235993 and JP 04/099781 describe, on the other hand, photochromatic compounds belonging to the group of spiro-indolino-naphtho-oxazines and indolino-naphtho-pyrans which have a silyl-carbamate group on the nitrogen atom of the indoline ring.

The Applicant has now found new silyl-carbamate photochromatic compounds belonging to the group of spiro-indolino-naphtho-oxazines, spiro-isoindolino-naphtho-oxaz-ines, spiro-pyrans and chromenes, which have excellent photochromatic characteristics, optimum fatigue resistance and high colourability characteristics.

An object of the present invention therefore relates to silyl-carbamate photochromatic compounds having general formula (I): 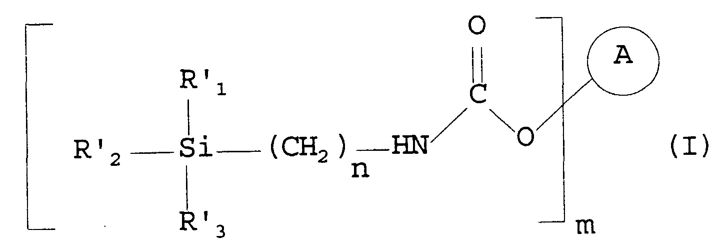 wherein:
- R'₁, R'₂ and R'₃, the same or different, represent a hydrogen atom; a linear or branched C₁-C₁₀ alkyl group, said alkyl group optionally substituted with 1-10 halogen atoms selected from fluorine, chlorine and bromine, linear or branched C₁-C₆ alkoxyl groups, carboxyl groups, cyano groups, or with an N,N-dialkyl-(C₁-C₆)-amine group, or with a cyclic amine; a vinyl group; an allyl or methallyl group; a linear or branched C₂-C₁₀ alkenyl group; a COOR'ₐ ester group wherein R'ₐ represents a linear or branched C₁-C₁₀ alkyl group; a benzyl group, said benzyl group optionally substituted with 1-5 halogen atoms selected from fluorine, chlorine and bromine, or with C(X')₃ groups wherein X' is selected from fluorine, chlorine and bromine, linear or branched C₁-C₁₀ alkyl groups, linear or branched C₁-C₆ alkoxyl groups, carboxyl groups, cyano groups, or with a 1,2,2,6,6-pentamethylpiperidine group; a linear or branched C₁-C₆ alkoxyl group; an N,N-dialkyl-(C₁-C₆)-amide group;
- n is an integer ranging from 0 to 11, extremes included;
- m is an integer ranging from 1 to 3;
- A represents a photochromatic compound having general formula (II): 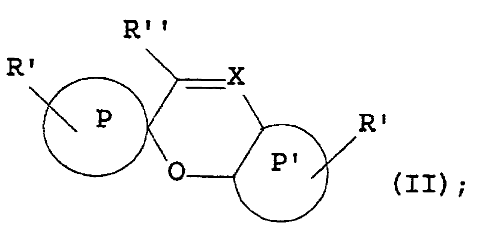
- X represents CH; or a nitrogen atom;
- R' represents a hydrogen atom; or a hydroxyl group, or a linear or branched (C₁-C₆) hydroxyalkyl group, or an ORx group wherein Rx represents a linear or branched (C₁-C₆) hydroxyalkyl group; on the condition that at least one of the R' substituents represents a hydroxyl group, or a linear or branched hydroxyalkyl group, or an ORx group wherein Rx has the meaning described above;
- R'' represents a hydrogen atom; a halogen atom selected from fluorine, chlorine and bromine; a linear or branched C₁-C₆ alkyl group; a C₄-C₁₀ cycloalkyl group; a linear or branched C₁-C₆ alkoxyl group; a phenyl group optionally substituted with a linear or branched C₁-C₆ halogen-alkyl group in which the halogen atom is selected from fluorine, chlorine and bromine, a linear or branched C₁-C₆ alkoxyl group, a hydroxyl group;
- P represents one of the following groups having general formula (III), (IV), (V), (VI): 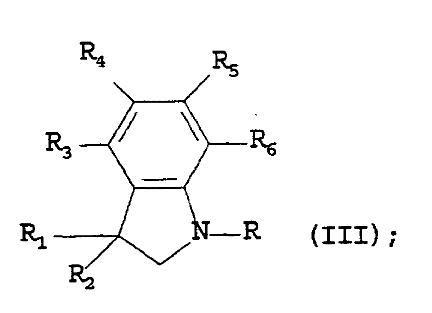 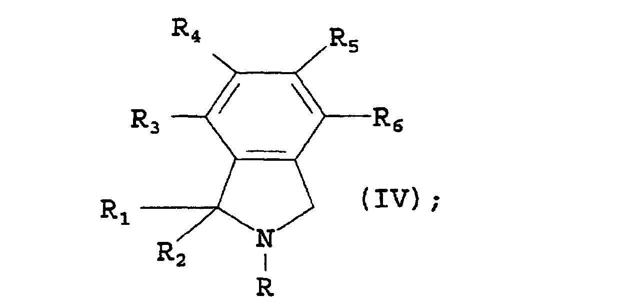 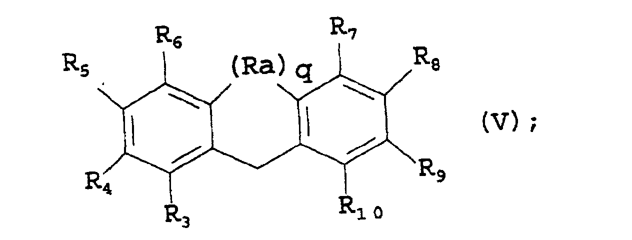 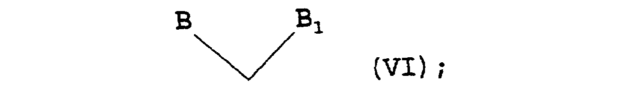
- R represents a linear or branched C₁-C₁₀ alkyl group, said alkyl group optionally substituted with 1-10 halogen atoms selected from fluorine, chlorine and bromine, linear or branched C₁-C₆ alkoxyl groups, carboxyl groups, cyano groups, or with a 1,2,2,6,6-pentamethylpiperidine group; a vinyl group; an allyl or methallyl group; a linear or branched C₂-C₆ alkenyl group; an aryl group selected from phenyl, biphenyl and naphthyl, said aryl group optionally substituted with linear or branched C₁-C₆ alkoxyl groups, carboxyl groups, N,N-dialkyl (C₁-C₆) amine groups; a COOR'ₐ ester group wherein R'ₐ represents a linear or branched C₁-C₁₀ alkyl group; a benzyl group, said benzyl group optionally substituted with 1-5 halogen atoms selected from fluorine, chlorine and bromine, or with C(X')₃ groups wherein X' is selected from fluorine, chlorine and bromine, linear or branched C₁-C₁₀ alkyl groups, linear or branched C₁-C₆ alkoxyl groups, carboxyl groups, cyano groups, or with a 1,2,2,6,6-pentamethylpiperidine group;
- R₁ and R₂, the same or different, represent a linear or branched C₁-C₁₀ alkyl group, said alkyl group optionally substituted with 1-10 halogen atoms selected from fluorine, chlorine and bromine, linear or branched C₁-C₆ alkoxyl groups, carboxyl groups, cyano groups, or with a 1,2,2,6,6-pentamethylpiperidine group; a vinyl group; an allyl or methallyl group; an acrylic or methacrylic group; a heteroallyl group; a linear or branched C₂-C₁₀ alkenyl group; a COOR'ₐ ester group wherein R'ₐ represents a linear or branched C₁-C₁₀ alkyl group; a benzyl group, said benzyl group optionally substituted with 1-5 halogen atoms selected from fluorine, chlorine and bromine, or with C(X')₃ groups wherein X' is selected from fluorine, chlorine and bromine, linear or branched C₁-C₁₀ alkyl groups, linear or branched C₁-C₆ alkoxyl groups, carboxyl groups, cyano groups, or with a 1,2,2,6,6-pentamethylpiperidine group; a linear or branched C₁-C₆ alkoxyl group; an N,N-dialkyl (C₁-C₆) amine group; or R₁ and R₂, considered jointly with the carbon atom to which they are bound, represent a C₄-C₁₀ cycloalkyl group, said cycloalkyl group optionally substituted with halogen atoms selected from fluorine, chlorine and bromine, or with hydroxyl groups, linear or branched C₁-C₆ alkoxyl groups, carboxyl groups, hydroxyl groups, cyano groups, N,N-dialkyl-(C₁-C₆)-amine groups;
- R₃, R₄, R₅, R₆, R₇, R₈, R₉ and R₁₀, the same or different, represent a hydrogen atom; a halogen atom selected from fluorine, chlorine, bromine and iodine; a linear or branched C₁-C₆ alkyl group, said alkyl group optionally substituted with 1-6 halogen atoms selected from fluorine, chlorine and bromine, linear or branched C₁-C₆ alkoxyl groups, carboxyl groups, hydroxyl groups, cyano groups, or with a 1,2,2,6,6-pentamethylpiperidine group; a benzyl group, said benzyl group optionally substituted with 1-5 halogen atoms selected from fluorine, chlorine and bromine, or with C(X')₃ groups wherein X' is selected from fluorine, chlorine and bromine, linear or branched C₁-C₁₀ alkyl groups, linear or branched C₁-C₆ alkoxyl groups, carboxyl groups, cyano groups, or with a 1,2,2,6,6-pentamethylpiperidine group; a hydroxyl group; a linear or branched C₁-C₆ alkoxyl group, said alkoxyl group optionally substituted with hydroxyl groups; an N,N-dialkyl-(C₁-C₆)-amine group; a piperidine, piperazine or morpholine group;a C₁-C₆ carboxyalkyl group; a C₂-C₆ carboxyalkenyl group;a carboxyamide group; an N-alkyl-(C₁-C₆)-carboxyamide group; an N,N-dialkyl- (C₁-C₆)-carboxyamide group; a cyano group; a nitro group; a sulfonic group; an aryl group selected from phenyl, diphenyl and naphthyl, said aryl group optionally substituted with N,N-dialkyl-(C₁-C₆)-amine groups, linear or branched C₁-C₆ alkoxyl groups, hydroxyl groups, linear or branched C₁-C₆ alkyl groups; an acyl group of the alkyl ketone, aryl ketone or benzyl ketone type; a vinyl group; an allyl or methallyl group; an acrylic or methacrylic group; a heteroallyl group; a linear or branched C₂-C₆ alkenyl group, said alkenyl group optionally substituted with one or two N,N-dialkyl-(C₁-C₆)-4-aniline groups; an N-2,3-dihydroindoline group; a linear or branched C₁-C₆ thioether group;
- two consecutive substituents between R₃ and R₁₀ can represent the condensation points with other aromatic, heterocyclic or quinonic rings;
- Ra represents a methylene group; a vinylene group; a carbon-carbon bond;
- q is 0, 1 or 2;
- B and B₁ are selected from the following groups: (i) aryl, phenyl and naphthalene groups, said aryl, phenyl and naphthalene groups being optionally mono-, di- or tri-substituted; (ii) heterocyclic aromatic groups such as, for example, pyridyl, furanyl, benzo-furan-2-yl, benzofuran-3-yl, thienyl, benzothien-2-yl, benzothien-3-yl, said heterocyclic aromatic groups being optionally mono- or di-substituted; said aryl, phenyl, naphthalene and heterocyclic aromatic groups being optionally substituted with hydroxyl groups, piperidine groups, morpholine groups, pyrrole groups, linear or branched C₁-C₆ alkyl groups, linear or branched C₁-C₆ chloro-alkyl groups, linear or branched C₁-C₆ fluoro-alkyl groups, linear or branched C₁-C₆ alkoxyl groups optionally substituted with hydroxyl groups, linear or branched C₁-C₄ alkyl groups substituted with hydroxyl groups, linear or branched C₁-C₆ alkoxyl groups, acryloxyl groups, methacryloxyl groups, halogen atoms selected from chlorine and fluorine; (iii) groups represented by the following general formulae (VII) and (VIII): 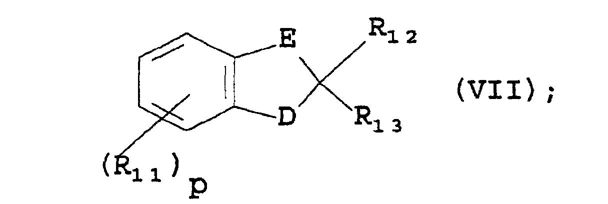 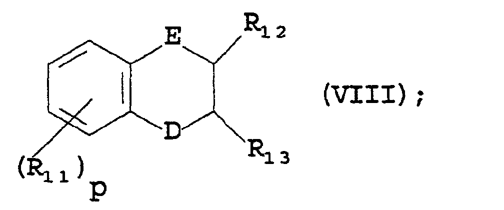 wherein E represents a carbon atom or an oxygen atom; D represents an oxygen atom or a substituted nitrogen atom, on the condition that, when D represents a substituted nitrogen atom, E represents a carbon atom, said nitrogen atom being substituted with linear or branched C₁-C₆ alkyl groups, or with C₂-C₆ acyl groups; R₁₁ represents a linear or branched C₁-C₆ alkyl group, a linear or branched C₁-C₆ alkoxyl group, a hydroxyl group, a halogen atom selected from chlorine and fluorine; R₁₂ and R₁₃ each independently represent a hydrogen atom, a linear or branched C₁-C₆ alkyl group, p is 0, 1 or 2; (iv) linear or branched C₁-C₆ alkyl groups, linear or branched C₁-C₆ chloro-alkyl groups, linear or branched C₁-C₆ fluoro-alkyl groups, linear or branched C₁-C₄ alkyl groups substituted with linear or branched C₁-C₆ alkoxyl groups, C₃-C₆ cycloalkyl groups optionally mono-substituted with a linear or branched C₁-C₆ alkoxyl group or with a linear or branched C₁-C₆ alkyl group, or with a halogen atom selected from chlorine and fluorine; (v) a group having general formula (IX): 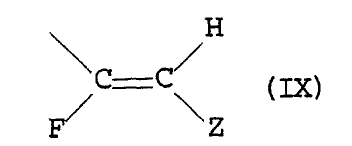 wherein F represents a hydrogen atom, a linear or branched C₁-C₄ alkyl group; and Z is selected from the following groups: naphthyl, phenyl, furanyl, thienyl, said naphthyl, phenyl, furanyl and thienyl groups, optionally mono- or di-substituted with linear or branched C₁-C₄ alkyl groups, linear or branched C₁-C₄ alkoxyl groups, halogen atoms selected from fluorine and chlorine; (vi) or, B and B₁ considered jointly, represent a fluoren-9-ylidene group, said fluoren-9-ylidene group optionally mono- or di-substituted with linear or branched C₁-C₄ alkyl groups optionally substituted with hydroxyl groups, linear or branched C₁-C₄ alkoxyl groups optionally substituted with hydroxyl groups, hydroxyl groups, halogen atoms selected from fluorine and chlorine, or they represent a group selected from spiro-monocyclic C₃-C₁₂ saturated hydrocarbon rings such as, for example, cyclopropylidene, cyclobutylidene, cyclopentylidene, cyclohexylidene, cycloheptylidene, cyclo-octylidene, cyclononylidene, cyclodecylidene, cycloundecylidene, cyclododecylidene; spiro-bicyclic C₇-C₁₂ saturated hydrocarbon rings such as, for example, bicyclo[2.2.1]-heptylidene (norbornylidene), 1,7,7-trimethyl-bicyclo [2.2.1]heptylidene (bornylidene), bicyclo [3.2.1]-octylidene, bicyclo[3.3.1]-nonan-9-ylidene, bicyclo[4.3.2]-undecane; spirotricyclic C₇-C₁₂ saturated hydrocarbon rings such as, for example, tricyclo[2.2.1.0^{2,6}]heptylidene, tricyclo[3.3.1.1^{3,7}]decylidene, (adamantylidene), tricyclo[5.3.1.1^{2,6}] dodecylidene;
- P' represents a monocyclic or polycyclic aromatic nucleus, belonging to one of the following types: benzenic represented by general formula (X); naph-thalenic represented by general formula (XI); quinolinic represented by general formula (XII); isoquinolinic represented by general formula (XIII); cumarinic represented by general formula (XIV); quinazolinic represented by general formula (XV); phenanthrenic represented by general formula (XVI); anthracenic represented by general formula (XVII); dibenzoheterocyclic represented by general formula (XVIII); naphtho-indenic represented by general formula (XIX): 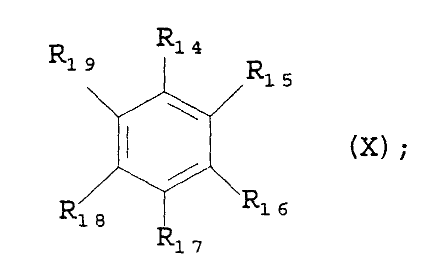 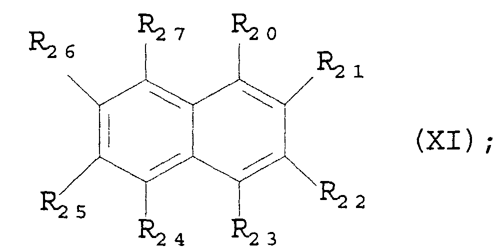 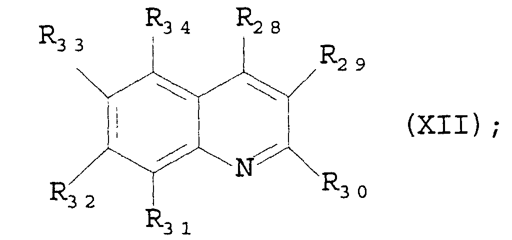 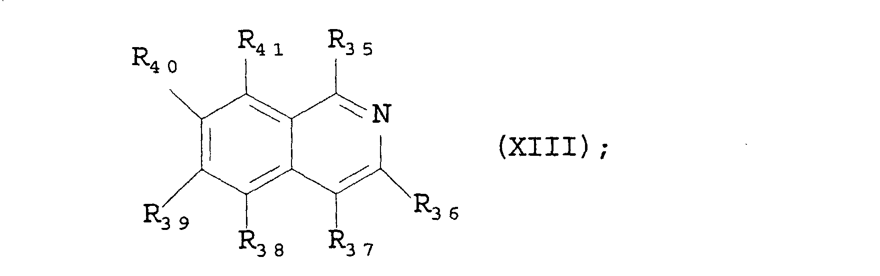 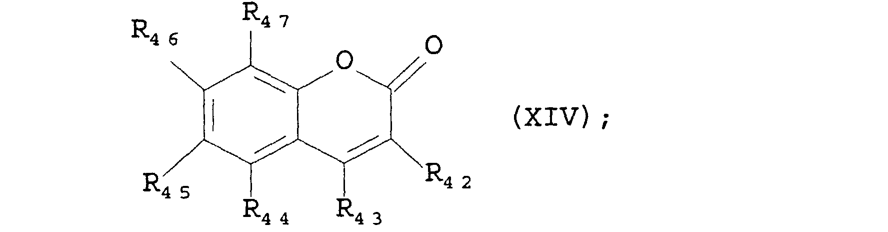 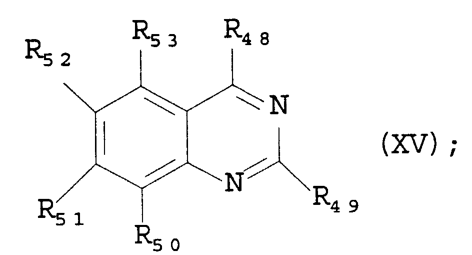 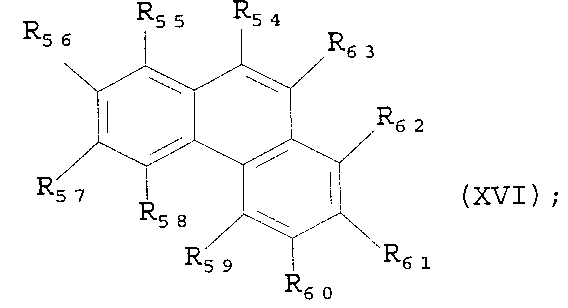 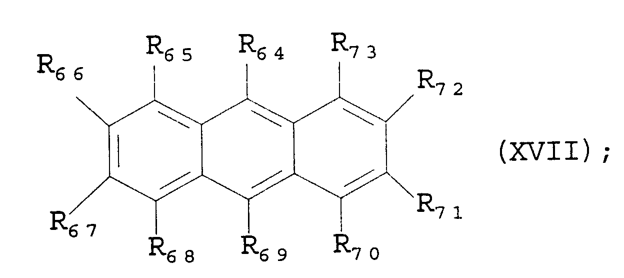 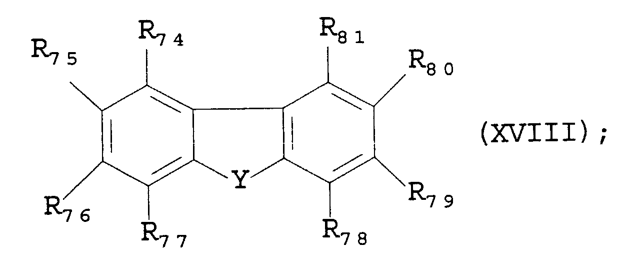 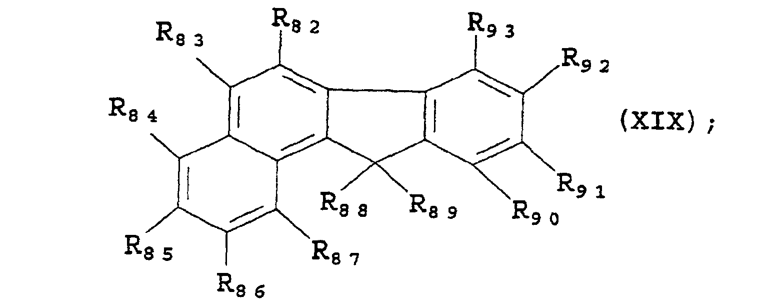 wherein:
   (a) at least two consecutive substituents between R₁₄ and R₁₉, R₂₀ and R₂₇, R₂₈ and R₃₄, R₃₅ and R₄₁, R₄₂ and R₄₇, R₅₀ and R₅₃, R₅₄ and R₆₃, R₆₄ and R₇₃, R₇₄ and R₈₁, R₈₂ and R₈₇, R₉₀ and R₉₃, represent the condensation points with the oxazine or pyran ring;
   (b) R₈₈ and R₈₉, considered jointly, represent an oxygen atom (or a carbonyl group); a spiro-hetero-cyclic group containing two oxygen atoms and from 3 to 6 carbon atoms including the spiro carbon atom (which can be represented as follows: -O-(C₂-C₅)-O- such as, for example, 1,3-spiro-2-dioxolane, 1,3-spiro-2-dioxane, etc., or, R₈₈ and R₈₉, each independently, represent a hydrogen atom, a hydroxyl group, a linear or branched C₁-C₆ alkyl group, a C₃-C₇ cycloalkyl group, an allyl group, a phenyl group optionally mono-substituted with a linear or branched C₁-C₆ alkyl group, or with a linear or branched C₁-C₆ alkoxyl group, a benzyl group optionally mono-substituted with a linear or branched C₁-C₆ alkyl group, or with a linear or branched C₁-C₆ alkoxyl group, a halogen atom selected from chlorine and fluorine, a -C(O)W group wherein W represents a hydroxyl group, a linear or branched C₁-C₆ alkyl group, a linear or branched C₁-C₆ alkoxyl group, a phenyl group optionally mono-substituted, an N,N-(C₁-C₆)-alkylamine group such as, for example, dimethyl amine, methyl propyl amine, etc.; or, R₈₈ and R₈₉, each independently, represent an -OR_{b} group wherein R_{b} represents a linear or branched C₁-C₆ alkyl group, a phenyl-(C₁-C₃)-alkyl group optionally mono-substituted with a linear or branched C₁-C₆ alkyl group, or with a linear or branched C₁-C₆ alkoxyl group, a linear or branched C₂-C₄ alkyl group optionally substituted with a linear or branched C₁-C₆ alkoxyl group, a C₃-C₇ cycloalkyl group optionally mono-substituted with a linear or branched C₁-C₄ alkyl group, a linear or branched C₁-C₆ alkyl group substituted with a halogen atom selected from chlorine and fluorine, an allyl group, a -CH(R_{c})G group wherein R_{c} represents a hydrogen atom, or a linear or branched C₁-C₃ alkyl group, G represents CN, CF₃, or a COOR_{d} group wherein R_{d} represents a hydrogen atom, or a linear or branched C₁-C₃ alkyl group, or R_{b} represents a -C(O)J group wherein J represents a hydrogen atom, a linear or branched C₁-C₆ alkyl group, a linear or branched C₁-C₆ alkoxyl group, a phenyl, aryl, naphthyl group, said aryl, phenyl and naphthyl groups optionally mono- or di-substituted with linear or branched (C₁-C₆) alkyl groups or with linear or branched (C₁-C₆) alkoxyl groups, a phenoxyl group optionally mono- or di-substituted with linear or branched (C₁-C₆) alkyl groups or with linear or branched (C₁-C₆) alkoxyl groups, an N,N-(C₁-C₆)-alkylamine group, a phenylamine group;
- the other substituents from R₁₄ to R₄₀ have the same meaning described for the substituents R₃, R₄, R₅, R₆, R₇, R₈, R₉ and R₁₀;
- Y represents a CH₂ group; an oxygen atom; a sulfur atom; a selenium atom; an N(Rₑ) group wherein Rₑ represents a linear or branched C₁-C₆ alkyl group.

Preferred photochromatic compounds having general formula (I) for the purposes of the present invention, are those wherein:
- R'₁, R'₂ and R'₃ represent an ethoxyl or methoxyl group;
- n is 3;
- m is 1;
- A represents a photochromatic compound having general formula (II) wherein:
   - X represents a nitrogen atom; or CH;
   - at least one of the R' substituents must be a hydroxyl group or a 2-hydroxyethoxyl group (-O-CH₂CH₂OH), or a hydroxyalkyl group such as (-CH₂OH) or (-CH₂CH₂OH);
   - R'' represents a hydrogen atom, a chlorine atom, a bromine atom, a methyl or a phenyl group;
- P represents one of the groups having general formula (III), (IV), (V) or (VI) wherein:

- R represents one of the following groups: methyl, ethyl, isopropyl, 2-allyl, 2-methallyl, 2-hydroxyethyl, 2-carboxymethyl, phenyl, 4-N,N-dimethylaminoaniline, 4-methoxybenzene, 4-cyano-benzene;
- R₁ and R₂, the same or different, represent a methyl or phenyl group; or, considered jointly with the carbon atom to which they are bound, represent a cyclohexyl group;
- R₃, R₄, R₅, R₆, R₇, R₈, R₉ and R₁₀, the same or different, represent a hydrogen atom, a fluorine atom, a chlorine atom, a bromine atom, or one of the following groups: methyl, isopropyl, hydroxyl, 2-hydroxyethyl, methoxyl, N,N-dimethylamine, piperidine, morpholine, carboxyl, carboxymethyl, N,N-dimethyl-carboxyamide, cyano, nitro, methylketone, phenylketone, phenyl;
- Rₐ represents a carbon-carbon bond;
- q is 0
- B and B₁, each independently, are selected from the following groups: (i) phenyl groups optionally mono- or di-substituted; (ii) heterocyclic aromatic groups such as, furanyl, benzofuran-2-yl, thienyl, benzothien-2-yl, said heterocyclic aromatic groups optionally mono- or di-substituted; said phenyl and heterocyclic aromatic groups being optionally substituted with hydroxyl groups, linear or branched C₁-C₃ alkyl groups, C₁-C₂ hydroxyalkyl groups, linear or branched C₁-C₃ alkoxyl groups, halogen atoms selected from chorine and fluorine; (iii) groups represented by general formula (VII) wherein E represents a carbon atom, D an oxygen atom; R₁₁ represents a linear or branched C₁-C₃ alkyl group, a linear or branched C₁-C₃ alkoxyl group; R₁₂ and R₁₃, each independently, represent a hydrogen atom, a linear or branched C₁-C₃ alkyl group; p is 0 or 1; (vi) or, B and B' considered jointly, represent a fluoren-9-ylidene group, or a group selected from: adamantylidene, bornylidene, norbornylidene, bicyclo [3.3.1]- nonan-9-ylidene;
- P' represents one of the groups having general formula from (X) to (XIX), wherein:
   (a) two consecutive substituents between R₁₄ and R₁₉, R₂₀ and R₂₇, R₂₈ and R₃₄, R₃₅ and R₄₁, R₄₂ and R₄₇, R₅₀ and R₅₃, R₅₄ and R₆₃, R₆₄ and R₇₃, R₇₄ and R₈₁, R₈₂ and R₈₇, R₉₀ and R₉₃, independently represent the condensation points with the oxazine or pyran ring; and the other substituents, each independently, represent a hydrogen atom, a fluorine atom, a chlorine atom, a bromine atom, or one of the following groups: methyl, isopropyl, hydroxyl, methoxyl, hydroxymethyl, 2-hydroxyethyl, 2-allyl, piperidine, morpholine, N,N-dimethylamine, carboxyl, carboxymethyl, N,N-dimethylcarboxyamide, cyano, nitro, methylketone, ethylketone, phenylketone, methylthiol;
   (b) two consecutive substituents between R₁₄ and R₁₉, R₂₀ and R₂₇, R₂₈ and R₃₄, R₃₅ and R₄₁, R₄₂ and R₄₇, R₅₀ and R₅₃, R₅₄ and R₆₃, R64 and R₇₃, R₇₄ and R₈₁, R₈₂ and R₈₇, R₉₀ and R₉₃, different from those indicated under point (a), represent the condensation points with a benzene or quinone ring;
- R₈₈ and R₈₉, each independently, represent a hydrogen atom, a hydroxyl group, a linear or branched C₁-C₄ alkyl group, a C₃-C₆ cycloalkyl group, a halogen atom selected from chlorine and fluorine, an -OR_{b} group, wherein R_{b} represents a linear or branched C₁-C₃ alkyl group, a phenyl-(C₁-C₂)-alkyl group, a phenyl-(C₁-C₃)-alkyl group mono-substituted with a linear or branched C₁-C₃ alkyl group, a phenyl-(C₁-C₃)-alkyl group mono-substituted with a linear or branched C₁-C₃ alkoxyl group, a C₂-C₄ alkyl group substituted with a linear or branched C₁-C₃ alkoxyl group, a linear or branched C₁-C₃ chlorine- or fluorine-alkyl group, a -CH(R_{c})G group, wherein R_{c} represents a hydrogen atom, or a linear or branched C₁-C₂ alkyl group, G represents CN, or a COOR_{d} group wherein R_{d} represents a hydrogen atom, or a linear or branched C₁-C₃ alkyl group, or R_{b} represents a -C(O)J group wherein J represents a hydrogen atom, a linear or branched C₁-C₃ alkyl group, a linear or branched C₁-C₃ alkoxyl group, a phenyl group, a naphthyl group, a phenoxyl group, a phenyl, aryl, naphthyl or phenoxyl group mono- or di-substituted with a linear or branched C₁-C₃ alkyl group, or with a linear or branched C₁-C₃ alkoxyl group, a phenylamine group; R₈₈ and R₈₉, each independently, preferably represent a hydrogen atom, a hydroxyl group, a linear or branched C₁-C₄ alkyl group, an -OR_{b} group, wherein R_{b} represents a linear or branched C₁-C₃ alkyl group;
- Y represents a CH₂ group, an oxygen atom, an N(Rₑ) group wherein Rₑ represents a linear or branched C₁-C₆ alkyl group.

Specific examples of preferred compounds according to the present invention, which should not be considered as limiting its scope in any way, are:
- The compound having formula (Ia): 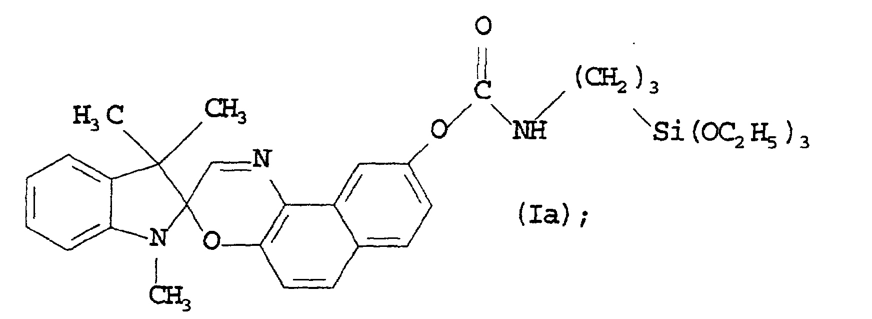
- The compound having formula (Ib): 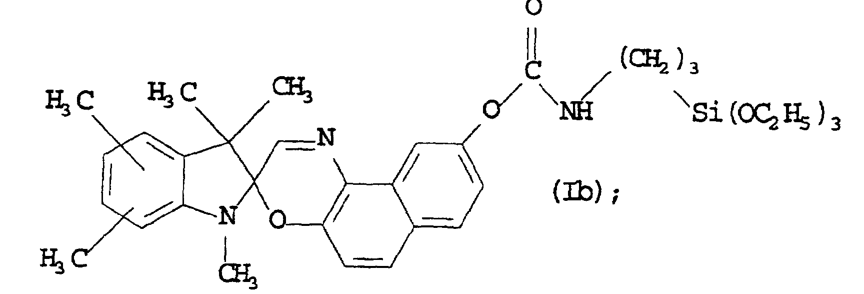
- The compound having formula (Ic): 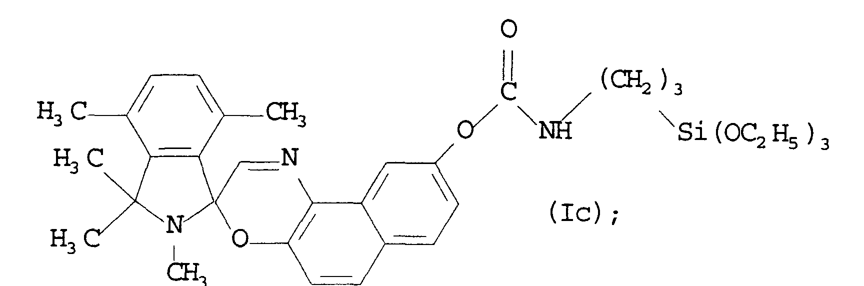
- The compound having formula (Id): 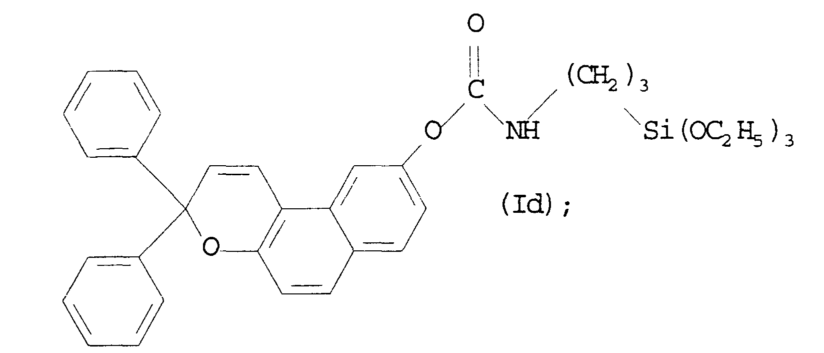
- The compound having formula (Ie): 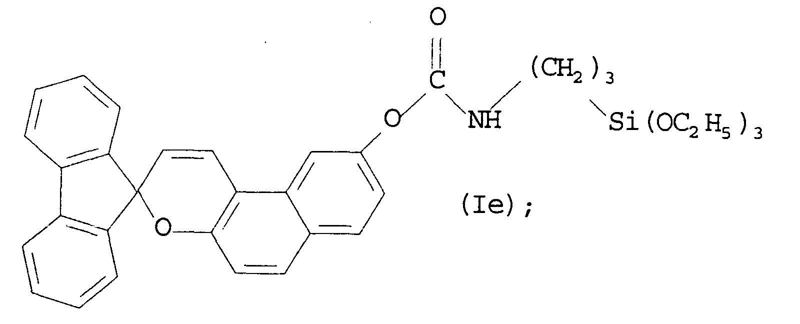
- The compound having formula (If): 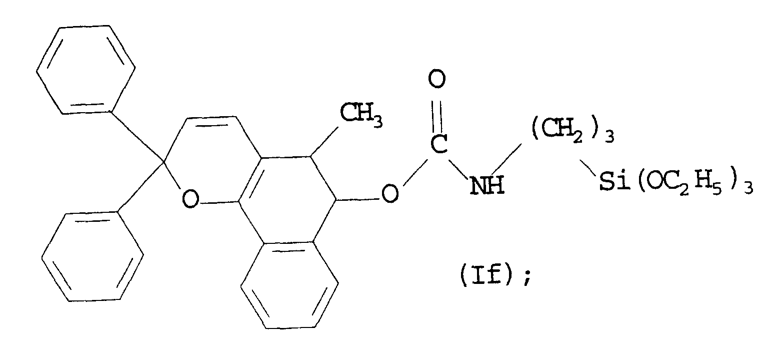
- The compound having formula (Ig):

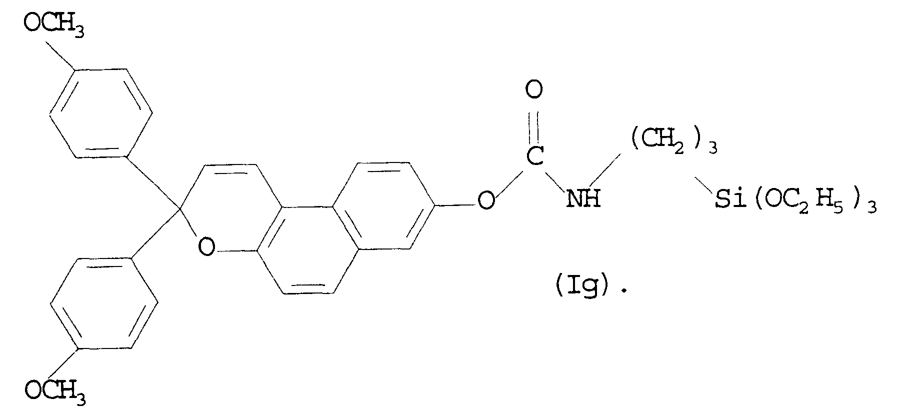

A further object of the present invention relates to a process for the preparation of the silyl-carbamate photochromatic compounds having general formula (I).

The silyl-carbamate photochromatic compounds having general formula (I) can be prepared by the addition of photochromatic compounds having general formula (II): 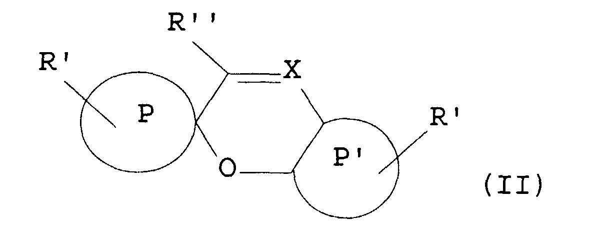 wherein at least one of the R' substituents represents a hydroxyl group or a 2-hydroxyethoxyl group, or a C₁-C₂ hydroxyalkyl group, and, R'', P, P' and Y have the same meanings described above, with isocyanates having general formula (XX): 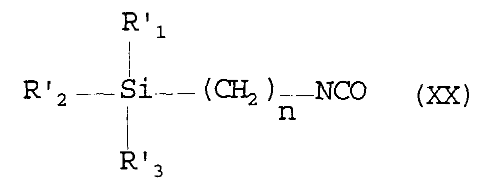 wherein R'₁, R'₂, R'₃ and n have the same meanings defined above, in the presence of an inert organic solvent such as, for example, acetone, toluene, or a mixture of said solvents, and a tertiary amine such as, for example, triethylamine, as catalyst, at a temperature ranging from 50°C to 100°C, preferably from 60°C to 80°C, for a time ranging from 1 hour to 15 hours, preferably from 1 to 6 hours.

The reaction product thus obtained, corresponding to one of the silyl-carbamate photochromatic compounds having general formula (I), is purified by means of crystallization.

The photochromatic compounds having general formula (II) are obtained by the condensation of indoline compounds having general formula (XXI), or isoindoline compounds having general formula (XXII), or compounds deriving from propargyl alcohol having general formula (XXIII), or compounds deriving from α,β-unsaturated aldehydes having general formula (XXIV), with nitroso compounds or aldehyde compounds having general formula (XXV), or with hydroxy-aryl compounds having general formula (XXVI), to give the respective photochromatic compounds having general formula (XXIa), (XXIIa) and (XXIIIa), indicated in Schemes 1-4: 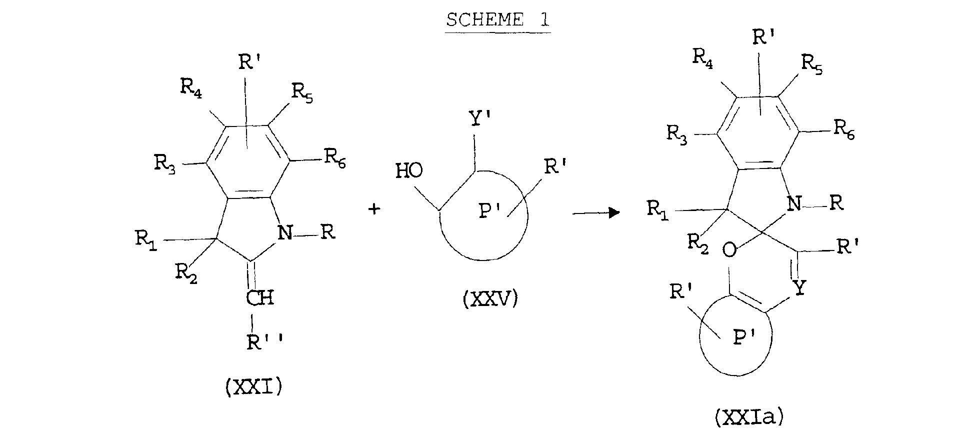 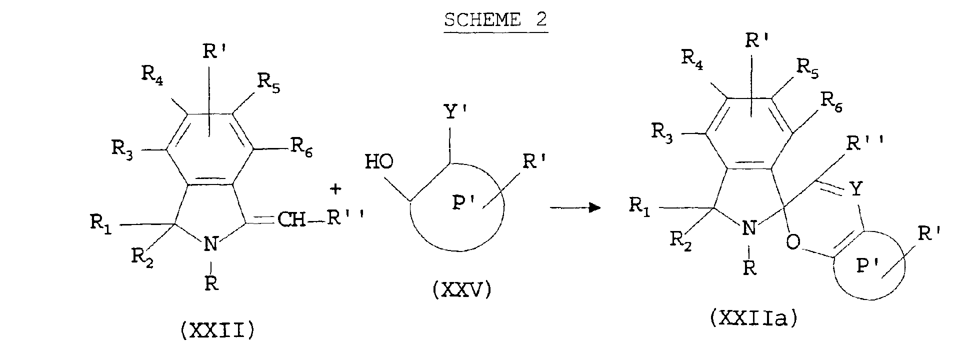 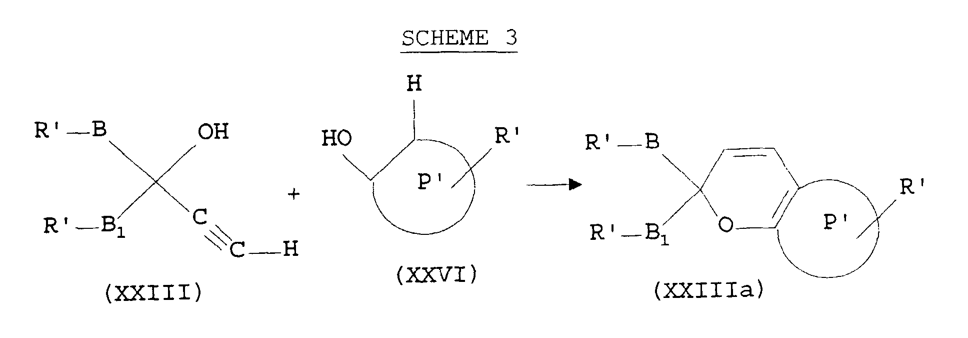 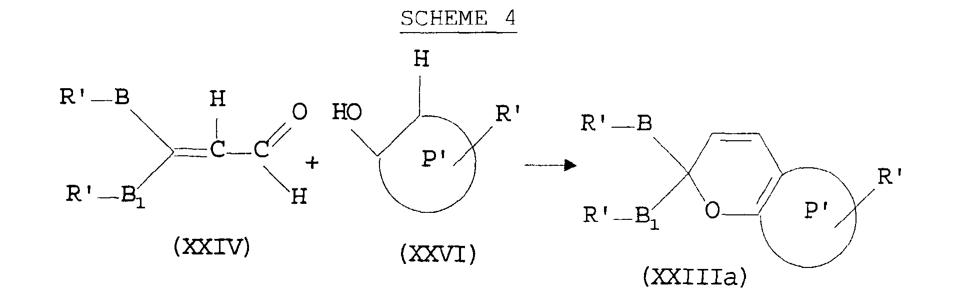 wherein the R substituents, from R₁ to R₆, B and B₁, R', R'', Y and P', have the same meanings described above and Y' represents an NO or CHO group.

Said condensation reaction is carried out in the presence of an inert organic solvent such as, for example, ethyl alcohol, isopropanol, toluene or a mixture of said solvents, and in the presence of an amine such as, for example, triethylamine, methylmorpholine, piperidine, or an acid such as, for example, paratoluenesulfonic acid, sulfuric acid, acid alumina, or a metal complex such as, for example, titanium (IV)tetra-ethoxide, as catalyst, at a temperature ranging from 50°C to 100°C, preferably from 60°C to 75°C, for a time ranging from 1 hour to 10 hours, preferably from 2 hours to 3 hours. The reaction product thus obtained is generally purified by elution on a silica column and subsequent crystallization from a solvent such as, for example, acetone, toluene, hexane, heptane, pentane, diethyl ether.

The silyl-carbamate photochromatic compounds having general formula (I), object of the present invention, can also be prepared by means of a different process which, obviously, forms a further object of the present invention.

The silyl-carbamate photochromatic compounds having general formula (I) can be prepared by the addition of isocyanates having general formula (XX) with indoline compounds having general formula (XXI), or with isoindoline compounds having general formula (XXII), or with compounds deriving from α,β-unsaturated aldehydes having general formula (XXIV), or with nitroso compounds or aldehyde compounds having general formula (XXV), or with hydroxy-aryl compounds having general formula (XXVI), obtaining the respective photochromatic compounds having general formula (XXIb), (XXIIb), (XXIVa), (XXIVb), (XXVa) and (XXVIa) indicated in Schemes 5-9: 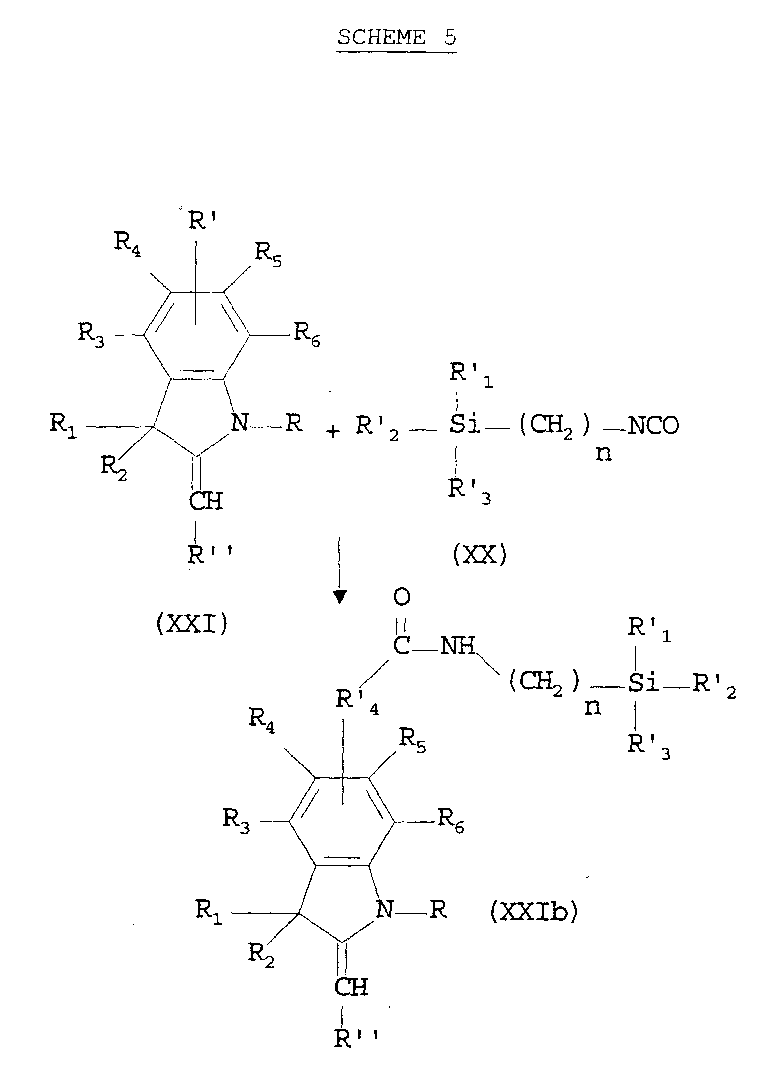 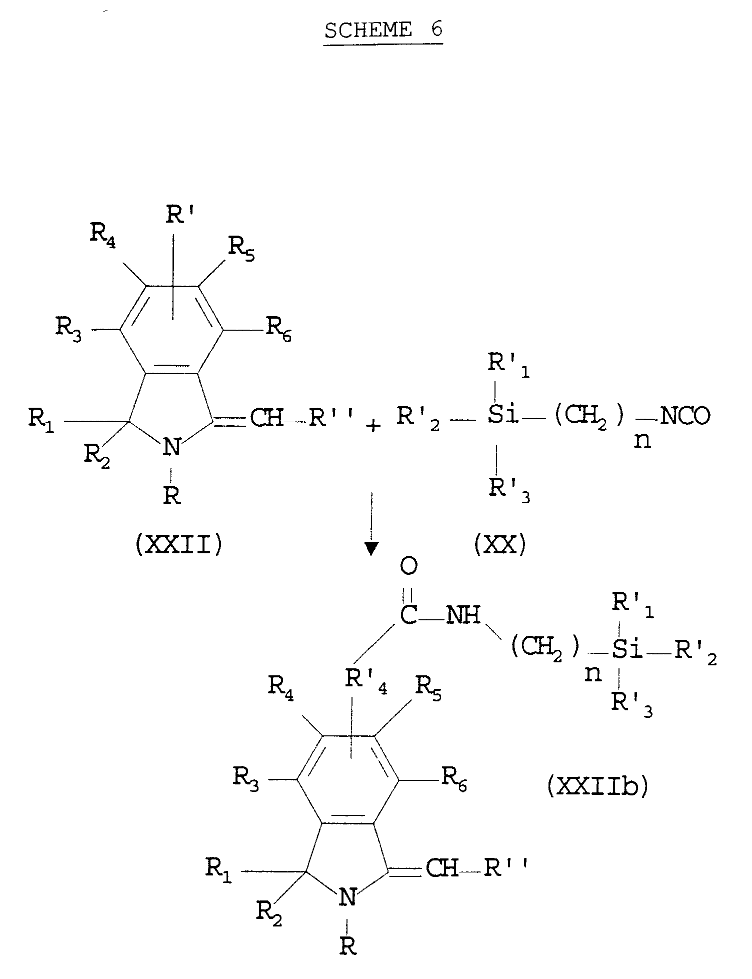 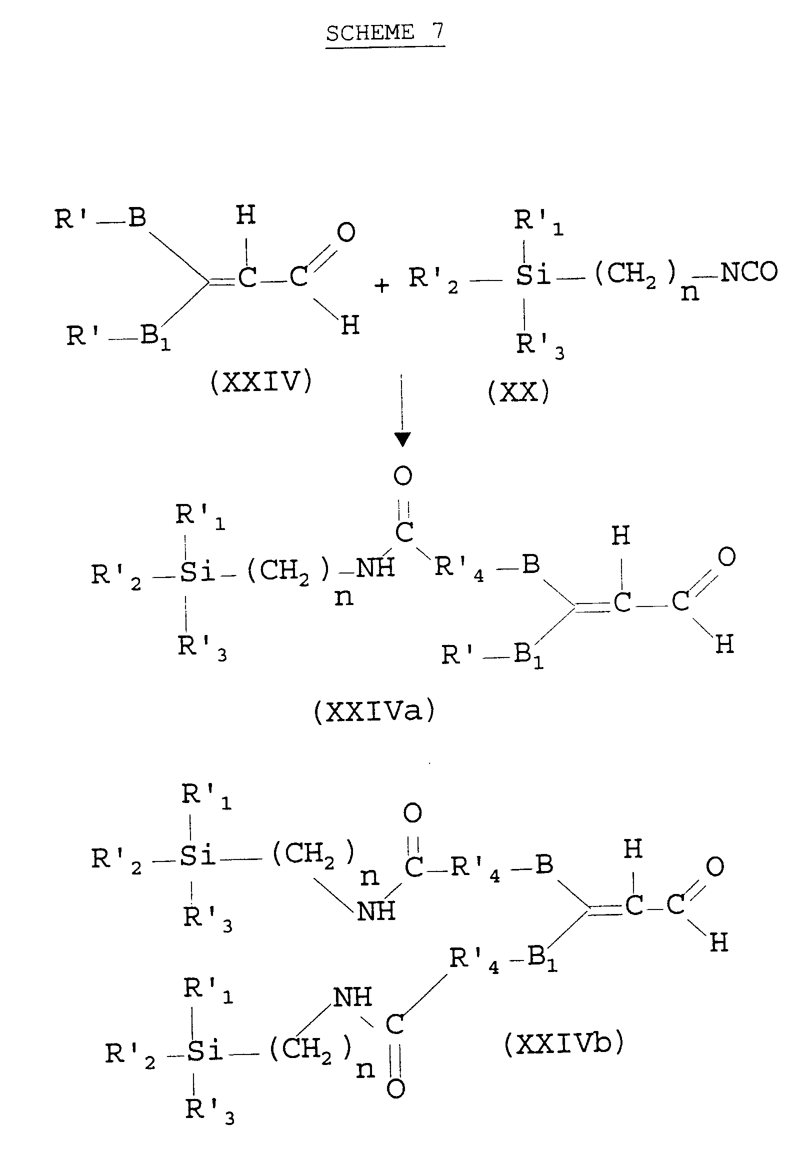 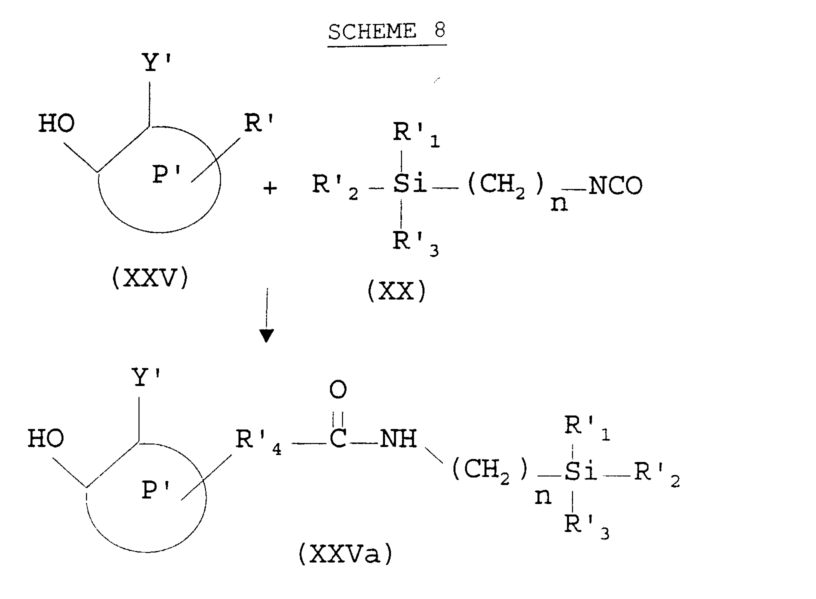 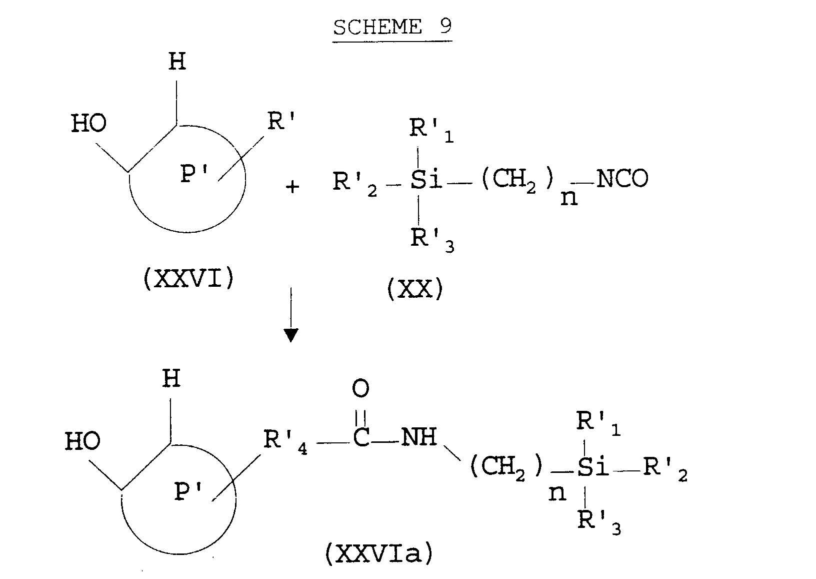 wherein the R substituents, from R₁ to R₆, B and B₁, R', R'', Y, Y' and P', have the same meanings described above and R'₄ represents an oxygen atom, a linear or branched (C₁-C₆) alkoxyl group, an ORₓ group wherein Rₓ represents a linear or branched (C₁-C₆) alkoxyl group, and subsequent condensation of the photochromatic compounds having general formula (XXIb), (XXIIb), (XXIVa), (XXIVb), (XXVa) and (XXVIa) thus obtained, operating under the conditions described herebelow.

The above addition reaction is carried out according to the operating conditions described above for the addition reaction of the photochromatic compounds having general formula (II) with the isocyanates having general formula (XX).

As already specified above, the silyl-carbamate photochromatic compounds having general formula (I), object of the present invention, can be subsequently obtained according to the following condensation reactions which are carried out under the same operating conditions described above for Schemes 1-4:
- condensation of the silylated compounds having general formula (XXIb) and (XXIIb) obtained according to Schemes 5 and 6 with the silylated compounds having general formula (XXVa) obtained according to Scheme 8, obtaining di-silylated photochromatic compounds having general formula (I);
- condensation of the silylated compounds having general formula (XXIVa) or (XXIVb) obtained according to Scheme 7 with the silylated compounds having general formula (XXVIa) obtained according to Scheme 9, obtaining di- and tri-silylated photochromatic compounds having general formula (I);
- condensation of the silylated compounds having general formula (XXIb) and (XXIIb) obtained according to Schemes 5 and 6 with the nitroso compounds or aldehyde compounds having general formula (XXV) described above, obtaining mono- and di-silylated photochromatic compounds having general formula (I);
- condensation of the silylated compounds having general formula (XXIVa) or (XXIVb) obtained according to Scheme 7 with the hydroxy-aryl compounds having general formula (XXVI) described above, obtaining mono- and di-silylated photochromatic compounds having general formula (I).

The isocyanates having general formula (XX) are commercially available products.

The indoline compounds having general formula (XXI) can be prepared by the reaction of 2,3,3-trime-thylindolene compounds with an alkyl or (meth)allyl halide as described, for example, in Japanese patent application JP 03/176467.

The isoindoline compounds having general formula (XXII) can be prepared according to processes known in the art and described, for example, in: "Tetrahedron" (1996), Vol. 22, page 2481; "Journal of Organic Chemistry" (1979), Vol. 44, page 1519; "Angewande Chemie International (1968), Vol. 7, page 373.

The indoline compounds having general formula (XXI) and the isoindoline compounds having general formula (XXII), are usually conserved in the form of salts such as, for example, iodides, bromides, chlorides, as the free base is easily oxidized in air.

The compounds deriving from propargyl alcohol having general formula (XXIII) can be prepared by the reaction of ketone compounds with sodium acetylide in xylene or with a lithium acetylide/ethylenediamine complex as described, for example, in U.S. patents 5,585,042 and 5,238,981.

The compounds deriving from α,β-unsaturated aldehydes having general formula (XXIV) can be prepared according to the processes known in the art as described, for example, in Japanese patent application JP 48/016482; or in "Organic Synthesis" (1970), Vol. 50, page 66.

The nitroso compounds having general formula (XXV) can be prepared by the reaction of phenolic compounds with nitrous acid or butyl nitrite, as described, for example, in Italian patent IT 1,176,858.

The aldehyde compounds having general formula (XXV) can be prepared by the reaction of phenolic compounds with paraformaldehyde, hexamethylenetetramine, or acetic acid, followed by the addition of an aqueous solution of sulfuric acid at 60%-70%, as described, for example, in German patent DE 2,425,430.

The hydroxy-aryl compounds having general formula (XXVI) are normally products which are commercially available such as, for example, β-naphthol or phenol.

Specific examples of indoline compounds having general formula (XXI), or isoindoline compounds having general formula (XXII), are the following:

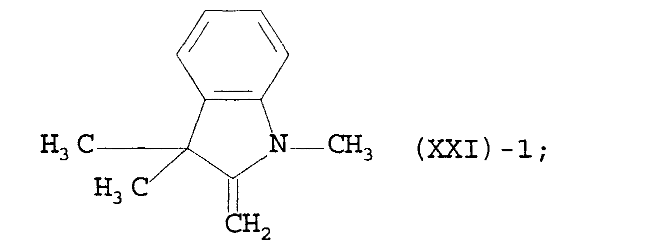

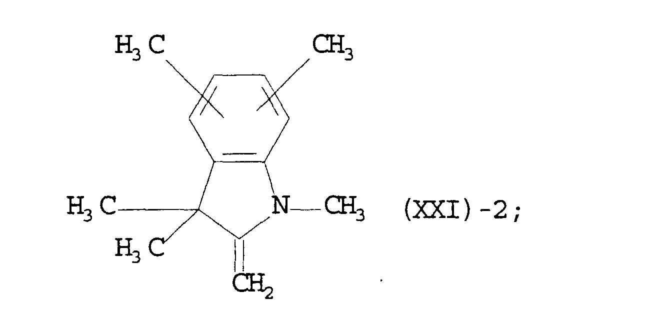

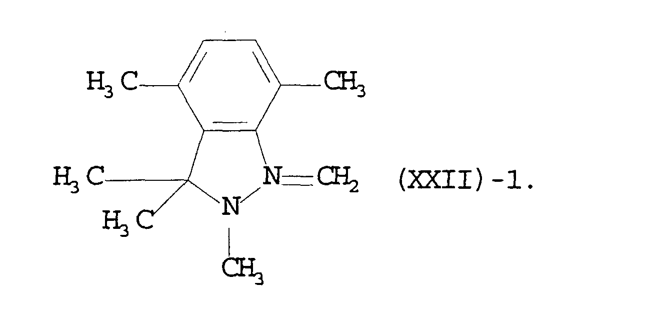

A specific example of a derivative of propargyl alcohol having general formula (XXIII) is the following:

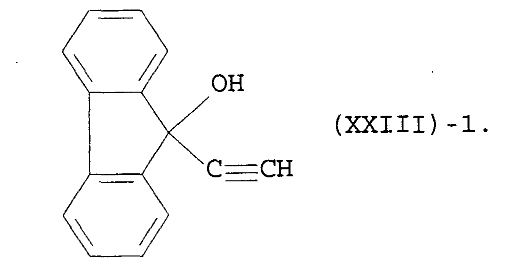

Specific examples of α,β-unsaturated aldehydes having general formula (XXIV) are the following:

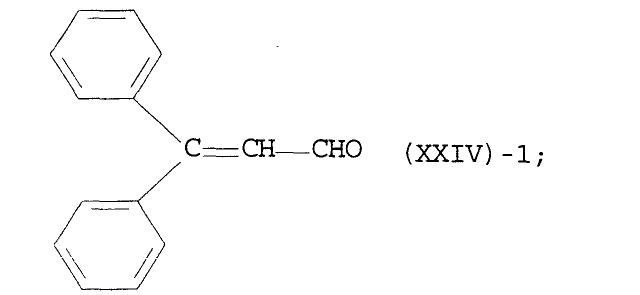

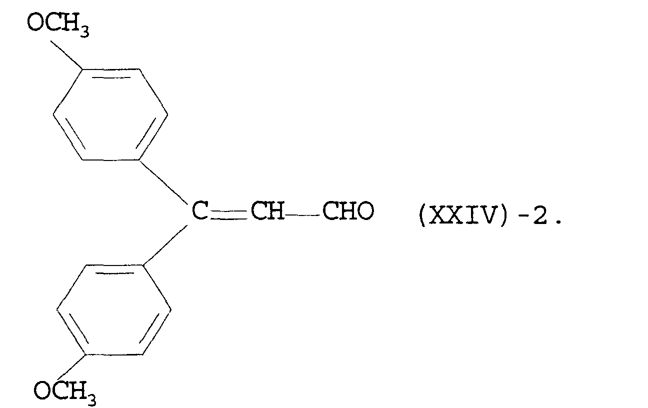

Specific examples of nitroso compounds having general formula (XXV) and hydroxy-aryl compounds having general formula (XXVI) are the following:

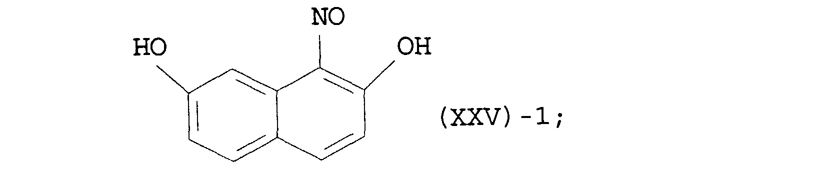

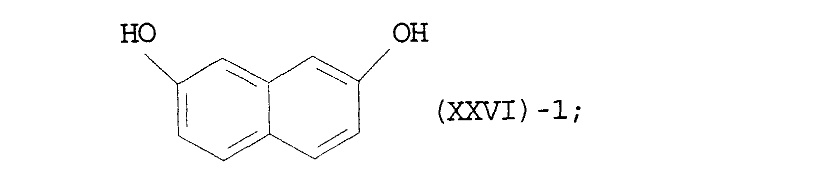

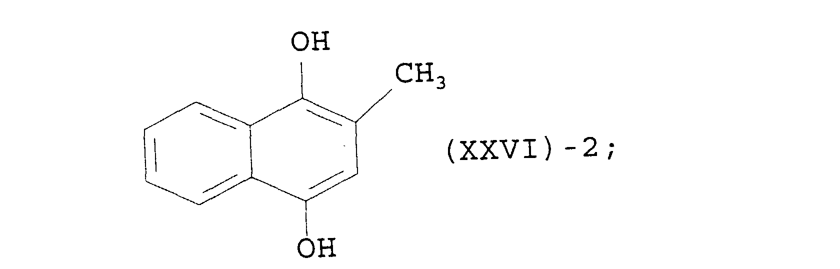

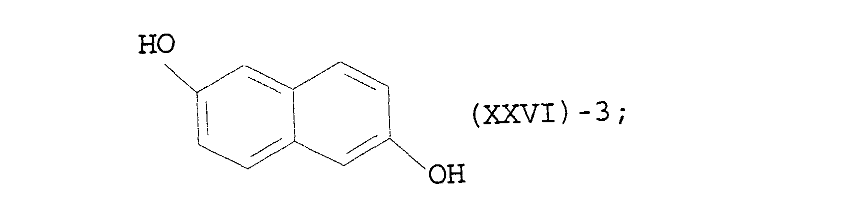

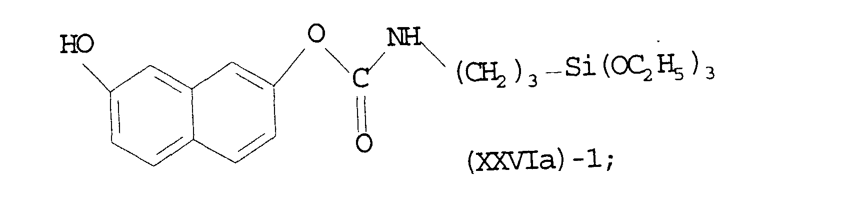

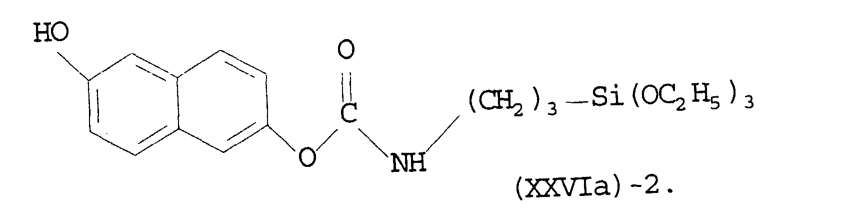

The silyl-carbamate photochromatic compounds having general formula (I), object of the present invention, are colourless or slightly yellow, green or grey-coloured powders.

Their solutions in common organic solvents such as, for example, benzene, toluene, methanol, ethanol, when not exposed to light sources, are colourless or slightly blue or yellow-coloured. These solutions, if exposed to a light source, either visible or ultraviolet, become blue, blue-green, yellow, orange or pink. The colouring quickly fades when the light source is removed.

The silyl-carbamate photochromatic compounds having general formula (I), object of the present invention, can be applied to the surface or incorporated in mass into the desired articles, using techniques already known in the art and described hereunder.

Some polymeric photochromatic end-articles can be obtained with moulding techniques such as, for example, injection or compression moulding, starting from polymers in which one or more of the silyl-carbamate photochromatic compounds having formula (I) are dispersed as homogeneous mass.

Alternatively, the silyl-carbamate photochromatic compounds having general formula (I) can be dissolved in a solvent, together with the polymeric material such as, for example, polymethylmethacrylate, polyvinyl alcohol, polyvinyl butyral, acetate butyrate of cellulose or epoxy, polysiloxane, urethane resin.

The mixture thus obtained is deposited on a transparent support to form, after evaporation of the solvent, a photochromatic coating.

The above silyl-carbamate photochromatic compounds having general formula (I) can also be added to a polymerizable monomer such as, for example, a meth(acrylic) or allyl carbonate monomer, so that, after polymerization carried out in the presence of a suitable initiator such as, for example, azo-bis (isobutyro nitrile) in the case of the meth(acrylic) monomer or a peroxyketal in the case of the allyl carbonate monomer, they are uniformly incorporated in the resin formed.

Finally, the silyl-carbamate photochromatic compounds having general formula (I) can be applied to a transparent substrate such as, for example, polycarbonate, polymethyl methacrylate or polydiethyleneglycol bis(allyl carbonate), by surface impregnation obtained by putting the substrate in contact, at a suitable temperature, with a solution or dispersion containing one or more of the silyl-carbamate photochromatic compounds having general formula (I), operating according to a known method described, for example, in U.S. patent 5,130,353.

The silyl-carbamate photochromatic compounds having general formula (I), object of the present invention, have the characteristic of being able to be incorporated in mass or using one of the techniques described above, into various organic polymers such as, for example, high density polyethylene (HDPE), low density polyethylene (LDPE), ethylene-vinylacetate copolymer, polyether amides, polypropylene, polymethylmethacrylate, polyvinyl alcohol, polyvinyl butyral, acetate butyrate of cellulose, epoxy, polysiloxane or urethane resins, polycarbonate, polydiethylene glycol bis(allyl carbonate), polyamides, polyesters, polystyrene, polyvinylchloride, polyethylacrylate, siliconic polymers.

A further object of the present invention therefore relates to polymeric compositions comprising the above polymeric materials and the above silyl-carbamate photochromatic compounds having general formula (I) and the photochromatic articles obtained from their processing.

The silyl-carbamate photochromatic compounds having general formula (I), object of the present invention, are added to the above polymeric compositions in a quantity ranging from 0.01% to 5% by weight, preferably between 0.1% and 2% by weight, with respect to the weight of said polymeric compositions.

The silyl-carbamate photochromatic compounds having general formula (I), object of the present invention, can also be added to coating compositions, such as for example, paints, lacquers, paints or lacquers based on hybrid polysiloxanes and/or silica gel, compositions based on plastic materials.

A further object of this invention consequently relates to coating compositions, such as for example, paints, lacquers, paints or lacquers based on hybrid polysiloxanes and/or silica gel, compositions based on plastic materials, comprising said photochromatic compounds.

The silyl-carbamate photochromatic compounds having general formula (I), object of the present invention, are added to the above coating compositions in a quantity ranging from 0.01% to 12% by weight, preferably between 0.1% and 4% by weight, with respect to the weight of said coating compositions.

Paints or lacquers based on hybrid polysiloxanes and/or silica gel are obtained by the "sol-gel" process described, for example, by M. Nogami, Y. Abe in: "Journal of Materials Science" (1995), Vol. 30, pages 5789-5792.

The above coating compositions can be applied to the substrate (metal, plastic, wood, etc.) using the conventional methods such as, for example, brushing, spraying, pouring, dipping or electrophoresis.

The photochromatic compounds having general formula (I), object of the present invention, can optionally be used in the presence of the usual additives for organic polymers such as, for example, phenolic antioxidants, sterically hindered amines, benzotriazoles, benzophenones, phosphites or phosphonites, enamines.

The silyl-carbamate photochromatic compounds having general formula (I), object of the present invention, which, as already mentioned above, are slightly yellow, green or grey-coloured, can be used as such, mixed with each other, or combined with other suitable organic photochromatic compounds, in order to obtain, after activation, the formation of other colourings such as brown and grey. For this purpose, photochromatic compounds belonging to the group of spiro-indoline-oxazines or spiro-pyrans described in the art such as, for example, in U.S. patent 5,066,818, are particularly useful.

Some illustrative examples are provided hereunder for a better understanding of the present invention and for its embodiment, but in no way limit the scope of the invention itself.

### EXAMPLE 1

### Preparation of 2,7-dihydroxy-1-nitroso-naphthalene having formula (XXV)-1

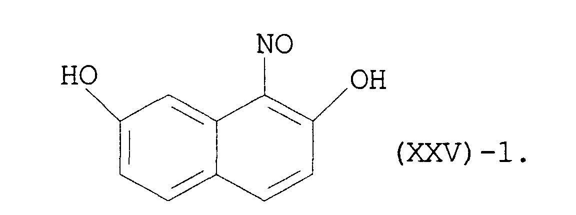

32 g of 2,7-dihydroxynaphthalene, 14 g of sodium nitrite, 200 ml of water and 8.0 g of sodium hydroxide are charged into a 250 ml flask, equipped with a reflux cooler and mechanical stirrer.

The above mixture is stirred, under a nitrogen atmosphere, until dissolution. 21.4 g of sulfuric acid diluted in 30 ml of water are then added dropwise and the reaction temperature is maintained at 0°C to 5°C. After 40 minutes at this temperature, the reaction raw product is filtered, washed with water and dried in air. 37.2 g of a dark brown powder corresponding to 2, 7-dihydroxy-1-nitroso-naphthalene (Compound with formula (XXV-1)), are obtained.

### EXAMPLE 2

### Preparation of the Compound having formula (XXIa)-1.

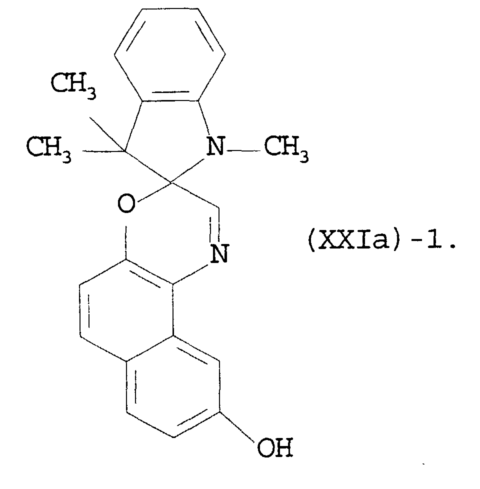

38 g of 2,7-dihydroxy-l-nitroso-naphthalene having formula (XXV)-1 obtained as described in Example 1, are mixed in a 250 ml flask, equipped with a reflux cooler and mechanical stirrer, with 35 g of 2-methylene-1,3,3-trimethyl-indoline having formula (XXI)-1 and 60 ml of isopropyl alcohol: the mixture obtained is maintained for 3 hours at reflux temperature.

At the end of the reaction, the solvent is eliminated by vacuum distillation and 40 ml of toluene and 2.0 g of activated carbon are then added. This mixture is heated to 70°C for 15 minutes: the reaction raw product is filtered, concentrated and cooled. The raw product precipitates.

The precipitated raw product is filtered, recrystallized from toluene (50%) and heptane (50%), obtaining 7.0 g of a solid white product corresponding to the Compound having formula (XXIa)-1 which is identified by gas-mass (molecular weight = 344).

### EXAMPLE 3

### Preparation of the Compound having formula (XXIa)-2.

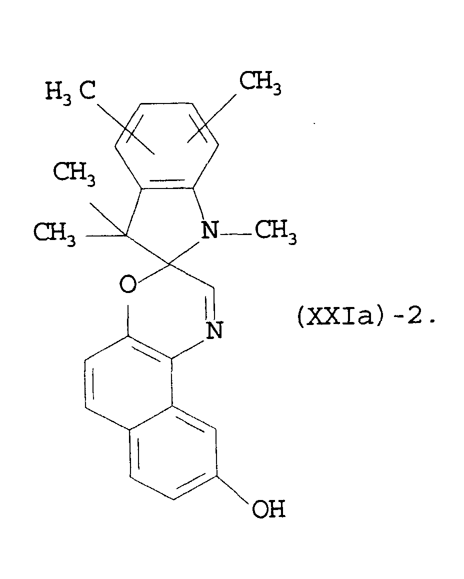

60 g of 2,7-dihydroxy-1-nitroso naphthalene having formula (XXV)-1 obtained as described in Example 1, are mixed in a 250 ml flask, equipped with a reflux cooler and mechanical stirrer, with 60 g of a 1/1 mixture of 2-ethylene-1,3,3,4,5-pentamethyl indoline and 2-ethylene 1,3,3,5,6-pentamethyl indoline having formula (XXI)-2 and 150 ml of toluene. The mixture obtained is maintained at 80°C under a nitrogen atmosphere for 4 hours, after which it is filtered and concentrated. 45 g of a raw product (grey) are obtained, which is purified by crystallization from toluene.

35 g of a product are obtained, corresponding to the Compound having formula (XXIa)-2 which is identified by gas mass (molecular weight = 372).

### EXAMPLE 4

### Preparation of 1,1,2,4,7-pentamethyl-N-3-methylene-isoindoline iodide having formula (XXII)-1a:

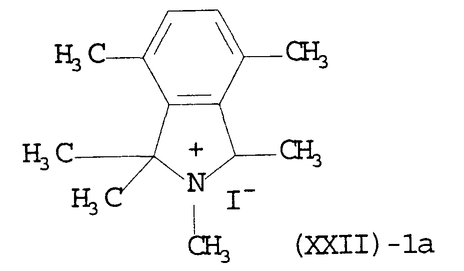

120 g of acetonylacetone, 36 g of methylamine hydrochloride, 70 ml of water and 20 ml of ethyl alcohol are charged into a 500 ml flask, equipped with a reflux cooler and mechanical stirrer.

The above mixture is heated to 80°C, under a nitrogen atmosphere, for 24 hours. At the end, the mixture is cooled and subsequently extracted with 60 ml of toluene. The aqueous phase obtained is treated with aqueous sodium hydroxide (solution at 30%) until a pH of 14 is reached: a yellow-white precipitate is formed which is rapidly filtered and washed with 60 ml of water and 20 ml of hexane.

The product is dried under vacuum and conserved in a nitrogen atmosphere: the yield is 56 g. Said product is identified as 1,2,3,4,7-pentamethyl-isoindoline by means of gas-mass (molecular weight = 187).

A quantity equal to 56 g of the above product is charged into a 250 ml stainless steel autoclave together with 120 ml of dioxane and 52 g of methyliodide. The autoclave is heated to 85°C and the whole mixture is maintained at this temperature, under a nitrogen atmosphere, for 6 hours. At the end, the autoclave is cooled to room temperature and the raw product is filtered obtaining a crystalline precipitate which is washed with 20 ml of ethyl acetate and finally with 20 ml of hexane.

100 g of a product are obtained, corresponding to 1,1,2,4,7-pentamethyl-N-3-methylene-isoindoline iodide (Compound having formula (XXII)-1a).
The free base, corresponding to the Compound having formula (XXII)-1, is identified by means of gas-mass (molecular weight = 201) and the salt by means of NMR.

### EXAMPLE 5

### Preparation of the Compound having formula (XXIIa)-1.

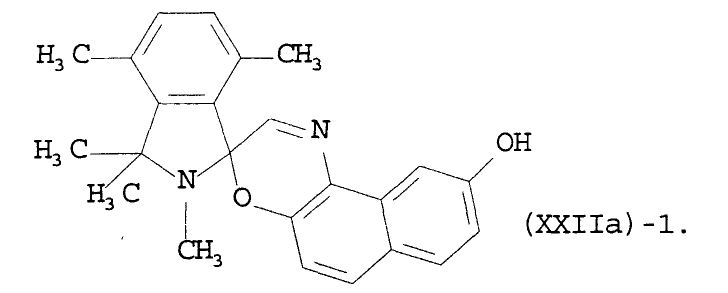

100 g of the 1,1,2,4,7-pentamethyl-3-methylene-isoindoline iodide having formula (XXII)-1a, obtained as described in Example 4, are suspended in 50 ml of toluene in a 250 ml flask, equipped with a reflux cooler and mechanical stirrer. 100 ml of an aqueous solution of sodium hydroxide (solution at 20%) are subsequently added to this suspension: the solution obtained is left under stirring, a 40°C, for 30 minutes and nitrogen is bubbled in. 62 g of 2,7-dihydroxy-1-nitroso-naphthalene having formula (XXV)-1 obtained as described in Example 1, are subsequently added to the organic phase which is recovered and poured into a 500 ml flask, and the whole mixture is maintained under stirring, at 60°C, for 1 hour.

The toluene solution obtained is filtered, diluted with 250 ml of toluene, 5 g of activated carbon are added and the mixture is then heated to 80°C, for 30 minutes. At the end, the solution is filtered again, concentrated and cooled: 35 g of a grey solid precipitate.

The grey solid is re-crystallized with toluene obtaining 27 g of a light grey product corresponding to the Compound having formula (XXIIa)-1 which is identified by means of gas-mass (molecular weight = 372).

### EXAMPLE 6

### Preparation of the Compound having formula (XXIIIa)-1.

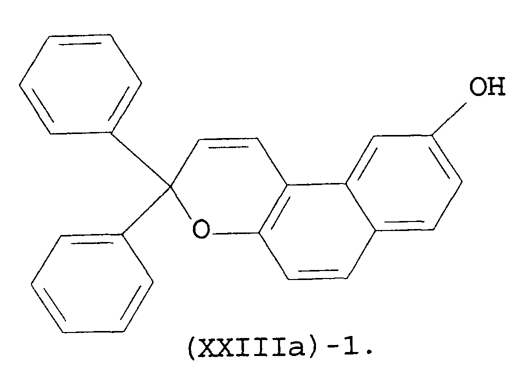

20 g of β-phenyl-cinnamaldehyde having formula (XXIV)-1, 16 g of 2,7-dihydroxynaphthalene having formula (XXVI)-1, 27 g of titanium(IV)tetraethoxide as catalyst and 80 ml of toluene, are charged into a steel autoclave.

The above mixture is heated to 105°C for 6 hours. The reaction raw product obtained is diluted with 200 ml of toluene, heated to 60°C for 1 hour with water and 1 g of oxalic acid: the mixture obtained is filtered and separated.

10 g of activated carbon are added to the toluene phase, the mixture is heated for 1 hour to 60°C: at the end, the solution is filtered, concentrated, the product crystallizes. The product is filtered. 28.9 g of a product are obtained, corresponding to the Compound having formula (XXIIIa)-1 which is identified by means of gas-mass (molecular weight = 350).

### EXAMPLE 7

### Preparation of the Compound having formula (XXIII)-1.

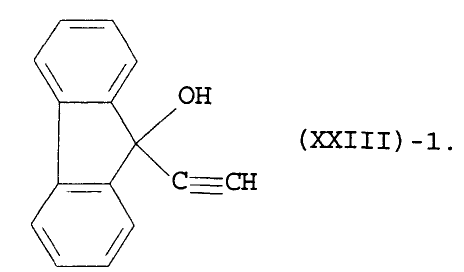

27 g of 9-fluorenone, 60 ml of tetrahydrofuran and 60 g of a suspension in xylene of sodium acetylide at 15% are charged into a 250 ml flask, equipped with a reflux cooler and mechanical stirrer: the mixture is maintained at room temperature for 24 hours.

The mixture is subsequently treated with 100 ml of water and 200 ml of toluene and the toluene phase is separated.

The toluene phase is concentrated and, upon cooling, 30 g of a white crystalline precipitate are obtained, corresponding to the compound having formula (XXIII)-1 identified by means of gas-mass (molecular weight = 206).

### EXAMPLE 8

### Preparation of the Compound having formula (XXIIIa)-2.

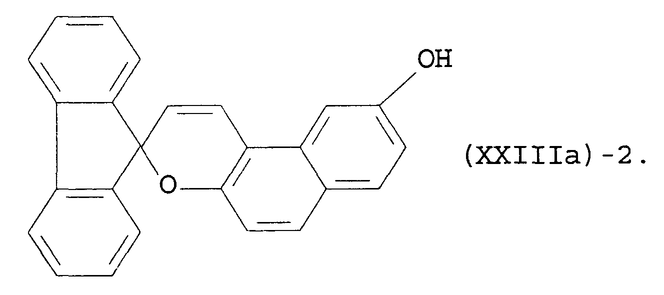

10 g of the product having formula (XXIII)-1, obtained as described in Example 7, 8.1 g of 2,7-dihydroxynaphthalene suspended in 60 ml of dioxane and 0.6 ml of trifluoroacetic acid are charged into a 250 ml flask, equipped with a reflux cooler and mechanical stirrer: the mixture is maintained at 60°C for 4 hours.

10 g of activated carbon and 50 ml of toluene are added to the reaction raw product obtained. The mixture is heated to 60°C, for 1 hour: the organic phase is filtered and concentrated.

The reaction raw product obtained is purified by elution on a silica column using a mixture of heptane/toluene (4/1) as eluant.

Upon subsequent crystallization from heptane, 1.52 g of a product are obtained, corresponding to the Compound having formula (XXIIIa)-2 which is identified by means of gas-mass (molecular weight = 348).

### EXAMPLE 9

### Preparation of the Compound having formula (XXVI)-2.

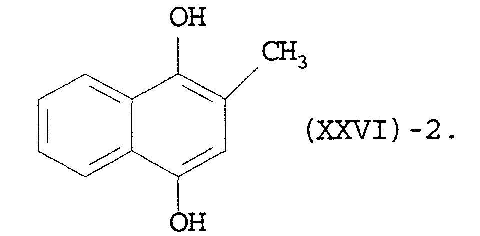

9.1 g of naphthoquinone, 30 ml of acetic acid, 5 ml of H₂O and 4.5 g of zinc in powder form, are charged into a 250 flask, equipped with a reflux cooler and mechanical stirrer.

The above mixture is heated to 100°C for 2 hours: the solution thus obtained is poured into water obtaining a white crystalline precipitate which is filtered, washed with water and heptane and dried.

6.67 g of a product are obtained, corresponding to the Compound having formula (XXVI)-2 which is identified by means of gas-mass (molecular weight = 174).

### EXAMPLE 10

### Preparation of the Compound having formula (XXIIIa)-3.

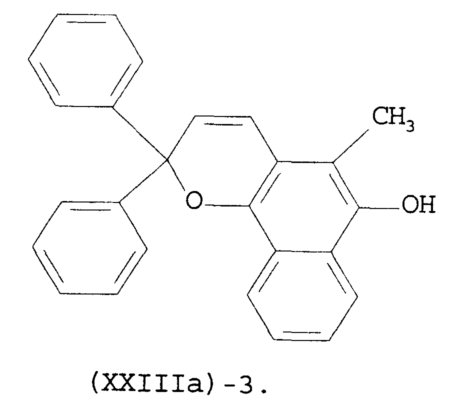

6.67 g of 1,4-dihydroxy-2-methylnaphthalene having formula (XXVI)-2, obtained as described in Example 9, 8 g of β-phenylcinnamaldehyde having formula (XXIV)-1 and 10.3 g of titanium(IV)tetra-ethoxide as catalyst and 40 ml of toluene, are charged into a 250 ml flask, equipped with a reflux cooler and mechanical stirrer.

The above mixture is heated to 100°C for 2 hours, under a nitrogen atmosphere. The reaction raw product obtained is diluted with toluene and 50 ml of water and 0.5 g of oxalic acid are added: the resulting mixture is heated to 90°C for 30 minutes.

The mixture is then filtered and 1 g of activated carbon is added to the filtrate: the mixture thus obtained is heated to 60°C, for 1 hour, obtaining a raw product which is filtered again and purified by elution on a silica column using a mixture of heptane/toluene (1/1) as eluant.

2.0 g of a product are obtained, corresponding to the Compound having formula (XXIIIa)-3 which is identified by means of gas-mass (molecular weight = 364).

### EXAMPLE 11

### Preparation of the Compound having formula (Ia).

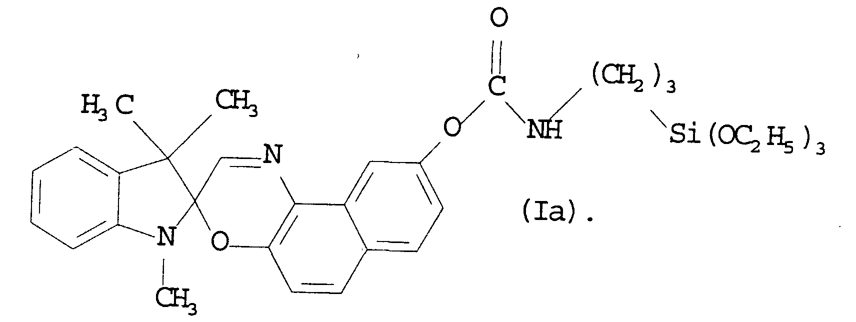

17.2 g of the Compound having formula (XXIa)-1, obtained as described in Example 2, 12.35 g of 3-triethoxysilyl-propyl-isocyanate, 40 ml of toluene, 60 ml of acetonitrile and 5 ml of triethylamine as catalyst, are charged into a 250 ml flask, equipped with a reflux cooler and mechanical stirrer: the mixture is heated to 60°C, under a stream of nitrogen, for an hour.

The reaction raw product obtained is concentrated and crystallized by slow cooling, obtaining a product which is subsequently filtered and dried. 33 g of a product are obtained, corresponding to the Compound having formula (Ia) which is identified by means of column liquid chromatography (HPCL) coupled with gas-mass (molecular weight = 591).

### EXAMPLE 12

### Preparation of the Compound having formula (Ib).

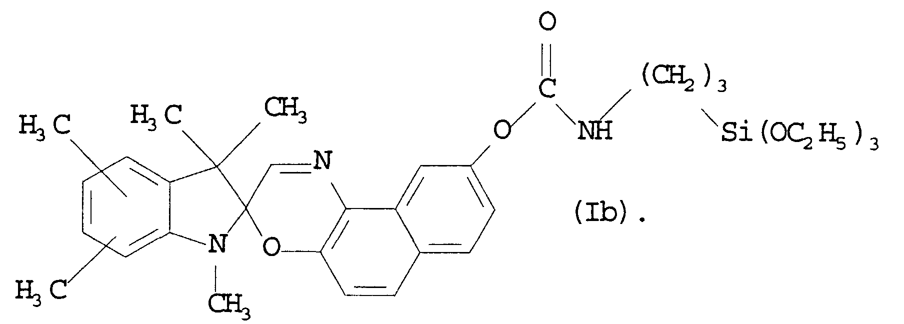

10.1 g of the Compound having formula (XXIa)-2, obtained as described in Example 3, 60 ml of toluene, 7.3 g of 3-triethoxysilyl-propyl-isocyanate and 5 ml of triethylamine are charged into a 100 ml flask, equipped with a reflux cooler and mechanical stirrer. The mixture is heated to 70°C, for 14 hours, under a nitrogen atmosphere.

The reaction raw product obtained is concentrated and crystallized by slow cooling obtaining 8 g of a product, corresponding to the Compound having formula (Ib) (greyish-white powder) which is identified by means of column liquid chromatography (HPCL) coupled with gas-mass (molecular weight = 619).

### EXAMPLE 13

### Preparation of the Compound having formula (Ic).

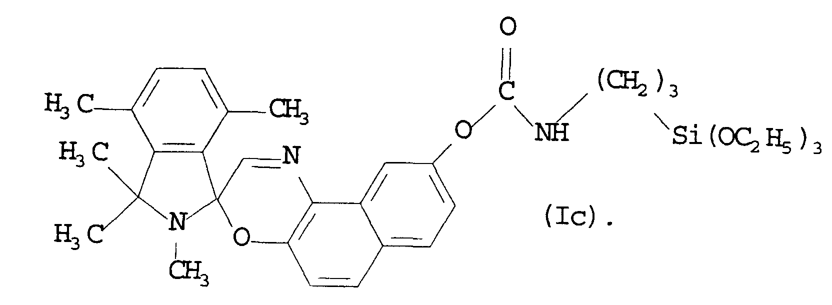

12 g of the Compound having formula (XXIIa)-1, obtained as described in Example 5, 50 ml of toluene, 8 g of 3-triethoxysilyl-propyl-isocyanate and 5 ml of triethylamine are charged into a 100 ml flask, equipped with a reflux cooler and mechanical stirrer. The mixture is heated to 80°C, for 3 hours, under a nitrogen atmosphere.

The reaction raw product obtained is concentrated and crystallized by slow cooling obtaining 15 g of a product (grey solid) which is subsequently filtered and dried.

Said product corresponds to the Compound having formula (Ic) which is identified by means of column liquid chromatography (HPCL) coupled with gas-mass (molecular weight = 619).

### EXAMPLE 14

### Preparation of the Compound having formula (Id).

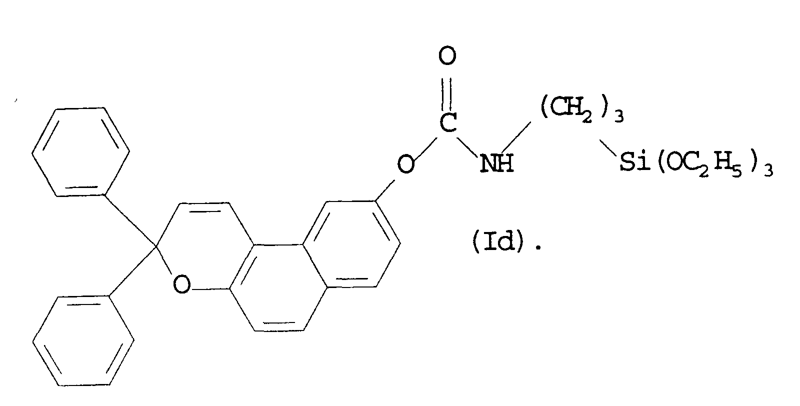

10 g of the Compound having formula (XIIIa)-1, obtained as described in Example 6, 30 ml of toluene, 8.05 g of 3-triethoxysilyl-propyl-isocyanate and 3 ml of triethylamine are charged into a 100 ml flask, equipped with a reflux cooler and mechanical stirrer. The mixture is heated to 80°C, for 20 hours, under a nitrogen atmosphere.

The reaction raw product obtained is concentrated and crystallized by slow cooling obtaining 15 g of a product corresponding to the Compound having formula (Id) (light grey powder) which is identified by means of column liquid chromatography (HPCL) coupled with gas-mass (molecular weight = 597).

### EXAMPLE 15

### Preparation of the Compound having formula (Ie).

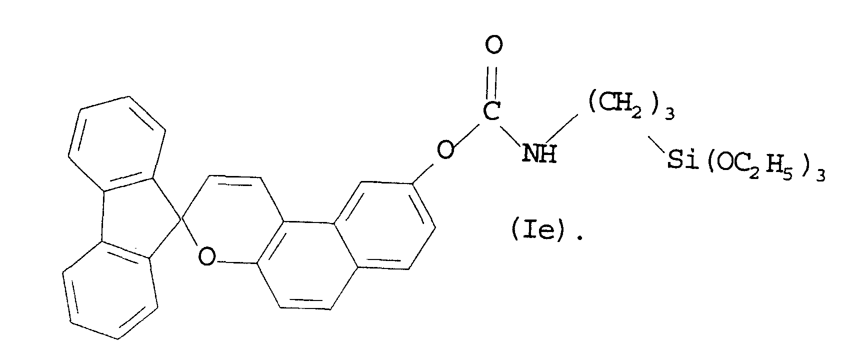

1.52 g of the Compound having formula (XXIIIa)-2, obtained as described in Example 8, 20 ml of toluene, 1.08 g of 3-triethoxysilyl-propyl-isocyanate and 5 ml of triethylamine are charged into a 100 ml flask, equipped with a reflux cooler and mechanical stirrer. The mixture is heated to 80°C, for 3 hours. The reaction raw product obtained is concentrated and cooled obtaining a precipitate which is filtered, washed with heptane and dried, obtaining 0.6 g of a product corresponding to the Compound having formula (Ie) which is identified by means of column liquid chromatography (HPCL) coupled with gas-mass (molecular weight = 595).

### EXAMPLE 16

### Preparation of the Compound having formula (If).

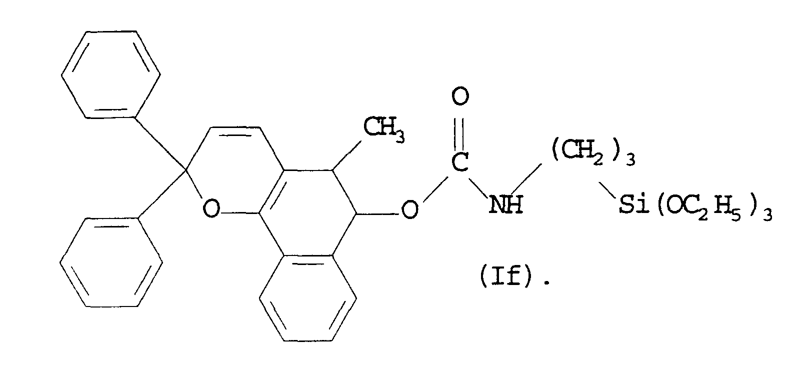

4 g of the Compound having formula (XXIIIa)-3, obtained as described in Example 10, 20 ml of toluene, 2.71 g of 3-triethoxysilyl-propyl-isocyanate having formula (XX) and 1 ml of triethylamine are charged into a 100 ml flask, equipped with a reflux cooler and mechanical stirrer. The mixture is heated to 80°C, for 5 hours.

The reaction raw product obtained is concentrated and crystallized by slow cooling obtaining 5 g of a product corresponding to the Compound having formula (If) (white powder) which is identified by means of column liquid chromatography (HPCL) coupled with gas-mass (molecular weight = 611).

### EXAMPLE 17

### Preparation of the Compound having formula (XXVa)-1.

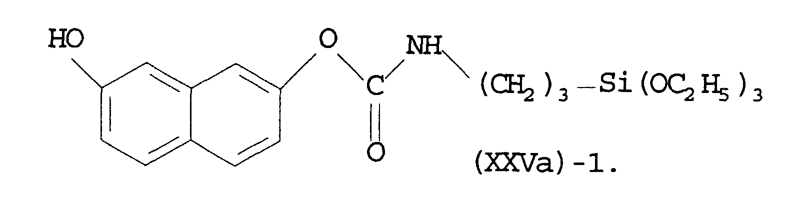

4 g of 2,7-dihydroxynaphthalene having formula (XXVI)-1, 4.9 g of 3-triethoxysilyl-propyl-isocyanate, 20 ml of toluene, 5 ml of acetonitrile and 5 ml of triethylamine are charged into a 100 ml flask, equipped with a reflux cooler and mechanical stirrer. The mixture is heated to 80°C for 10 hours under a nitrogen atmosphere.

The reaction raw product obtained is dried under vacuum and is purified by elution on a silica column using a mixture of toluene/heptane (1/1) as eluant, obtaining 3.6 g of a product corresponding to the Compound having formula (XXVa)-1 which is identified by means of column liquid chromatography (HPCL) coupled with gas-mass (molecular weight = 407).

### EXAMPLE 18

### Preparation of the Compound having formula (Id).

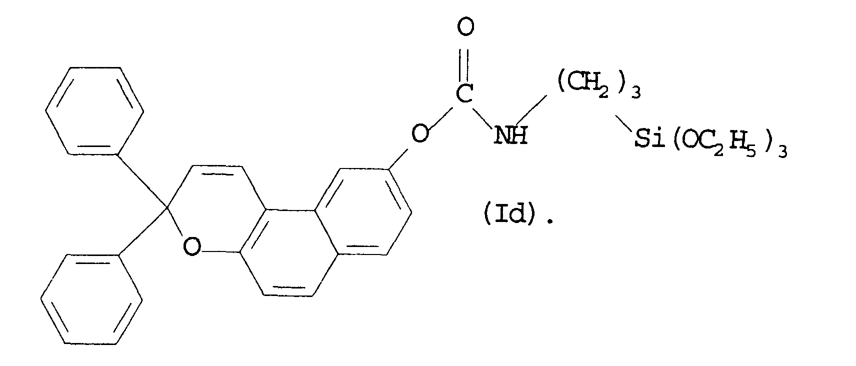

3.6 g of the Compound having formula (XXVIa)-1, obtained as described in Example 17, 1.9 g of β-phenylcinnamaldehyde having formula (XXIV)-1 and 1.5 g of ethylmorpholine are charged into a 100 ml flask, equipped with a reflux cooler and mechanical stirrer. The mixture is heated to 100°C for 6 hours, the water which is formed during the reaction being subjected to azeotropic distillation.

The reaction raw product obtained is dried under vacuum and is purified by elution on a silica column using a mixture of heptane/methylethylketone (7/3) as eluant, obtaining 2.11 g of a compound corresponding to the Compound having formula (Id) which is identified by means of column liquid chromatography (HPCL) coupled with gas-mass (molecular weight = 597) and which proves to be identical to the Compound (Id) obtained as described in Example 14.

### EXAMPLE 19

### Preparation of the Compound having formula (XXVIa)-2.

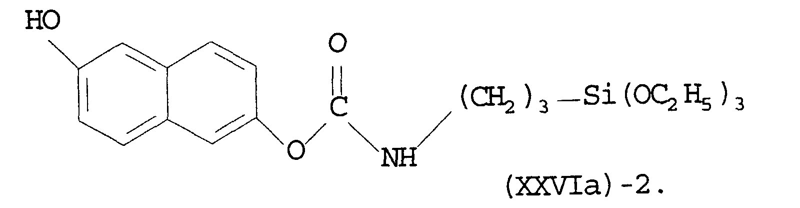

2.6 g of 2,7-dihydroxynaphthalene having formula (XXVI)-1, 5.8 g of 3-triethoxysilyl-propyl-isocyanate, 40 ml of toluene, 10 ml of acetonitrile and 5 ml of triethylamine are charged into a 100 ml flask, equipped with a reflux cooler and mechanical stirrer. The mixture is heated to 80°C, for 10 hours, under a nitrogen atmosphere.

The reaction raw product obtained is dried under vacuum and is purified by elution on a silica column using a mixture of toluene/heptane (1/1) as eluant, obtaining 9.7 g of a compound corresponding to the Compound having formula (XXVIa)-2 which is identified by means of column liquid chromatography (HPCL) coupled with gas-mass (molecular weight = 407).

### EXAMPLE 20

### Preparation of the Compound having formula (XXIV)-2.

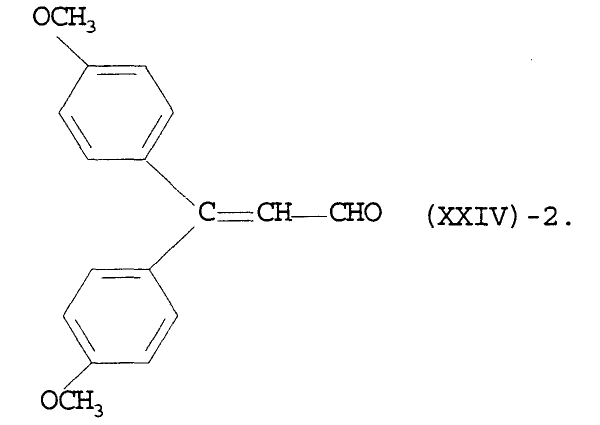

5 g of 1,1-bis(4-methoxy)ethylene, 5.4 g of dimethylformamide are charged into a 100 ml flask, equipped with a reflux cooler and mechanical stirrer. The mixture is heated to 40°C and, at this temperature, 5 g of phosphorous oxytrichloride are slowly added dropwise: at the end of the addition, the mixture is heated to 85°C for 5 hours, under a nitrogen atmosphere.

The mixture obtained is poured into 200 ml of water, under stirring, and is neutralized by the gradual addition of a solution of sodium hydroxide at 30% until a distinctly alkaline pH is obtained. Two phases are obtained: the reaction raw product is extracted, with toluene, from the aqueous phase, and is subsequently concentrated, 5 ml of heptane are added and the mixture is left to crystallize.

5.3 g of a crystalline product (yellow) are obtained, corresponding to the Compound having formula (XXIV)-2 which is identified by means of column liquid chromatography (HPLC) coupled with gas-mass (molecular weight = 268).

### EXAMPLE 21

### Preparation of the Compound having formula (Ig).

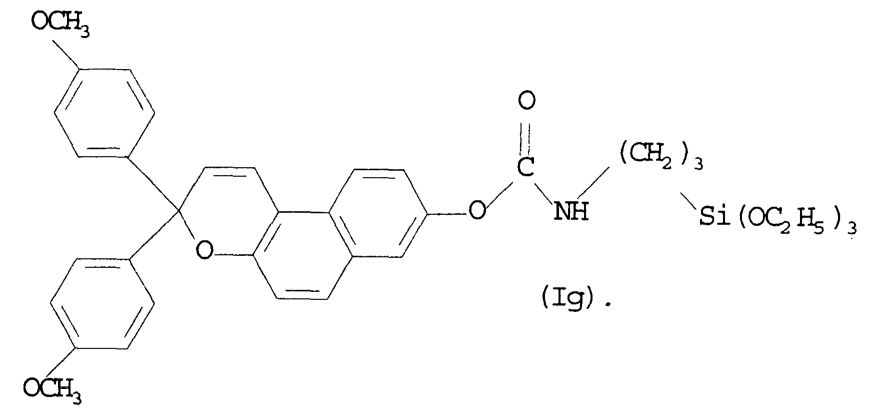

8 g of the Compound having formula (XXVIa)-2, obtained as described in Example 19, 5.3 g of the Compound having formula (XXIV)-2, obtained as described in Example 20, 20 ml of toluene and 4 g of methylmorpholine are poured into a 100 ml flask, equipped with a reflux cooler and mechanical stirrer. The mixture is heated to 100°C for 6 hours, the water which is formed during the reaction being subjected to azeotropic distillation.

The reaction raw product obtained is dried under vacuum and is purified by elution on a silica column using a mixture of heptane/methylethylketone (7/3) as eluant, obtaining 4.5 g of a product corresponding to the Compound having formula (Ig) which is identified by means of column liquid chromatography (HPCL) coupled with gas-mass (molecular weight = 657).

### EXAMPLE 22

### Evaluation of the photochromatic activity.

The photochromatic activities of Compounds (Ia)-(Ig)are compared with the photochromatic activity of the following compounds:
- Compound (A): 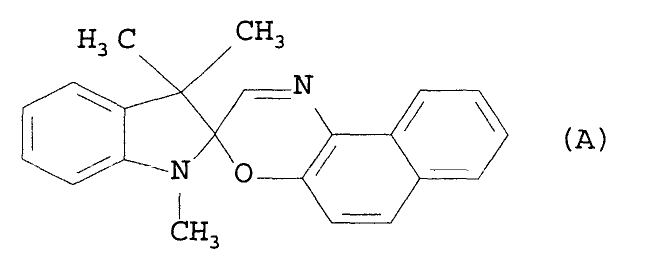 known under the trade-name of VARIACROL® BLUE A of Great Lakes Chemical Corporation;
- Compound (B): 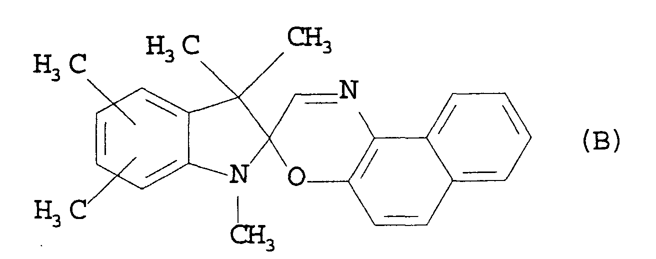 known under the trade-name of VARIACROL® BLUE D of Great Lakes Chemical Corporation;
- Compound (C): 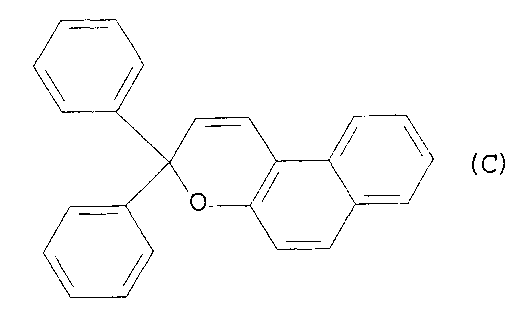 known under the trade-name of VARIACROL® YELLOW L of Great Lakes Chemical Corporation;
- Compound (D): 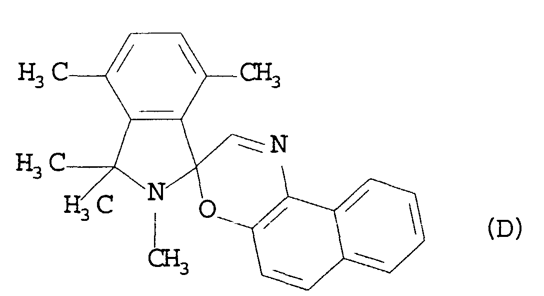 obtained as described in patent application WO 98/939568;
- Compound (E): 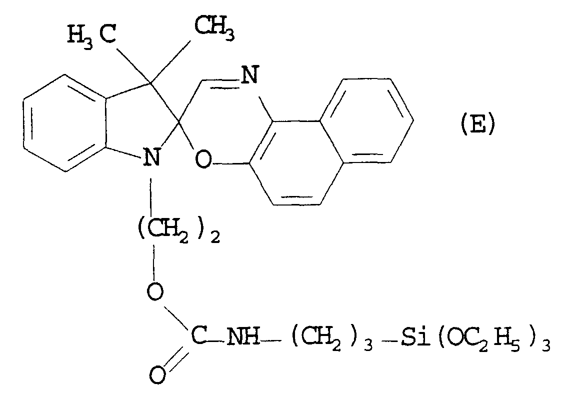 obtained as described in Japanese patent application JP 04/235993.

Solutions are prepared at a concentration equal to 10⁻⁴ M (the exact concentrations are indicated in Table 1) of the various Compounds (Ia)-(Ig) and of the Compounds (A)-(E)in methanol and 1.3 ml of each solution is subsequently placed in a 1 cm quartz cell having an inlet with a square base.

The quartz cell containing the solution is introduced into a Peltier temperature control system (HP accessory-Nr. HP 89090A), with the possibility of magnetic stirring during the measurement, and is radiated from above with a Philips UVA lamp with irradiation equal to 9 Watt/cm² resting on the cell itself. The irradiation time is 60'' in order to ensure that the maximum colouring degree of the solution is reached.

The spectrum of the solution is registered before and after irradiation between 400 nm and 700 nm with a Hewlett Packard HP 8452A photodiodes spectrophotometer.

The following data are determined by means of a mathematical calculation effected by means of the Lotus 123v5w program based on the tristimulus theory:
(a) (ΔY) which indicates the difference between the light transmittance (Y) of the solution before and after irradiation and represents the photochromatic activity of the compound analyzed at the concentrations indicated in Table 1;
(b) ΔL*, Δa* and Δb* which correspond to the variation in the colourimetric coordinates of the above solutions CIE 1976 (L*, a* and b*), corresponding to the gloss or luminosity (L*), to the red-green coordinate (a*) and yellow-blue coordinate (b*), before and after irradiation.

The data obtained are indicated in Table 1.

A further explanation of the above values and information relating thereto can be found, for example, in "Color Science: Concepts and Methods, Quantitative data and Formulae" (1982). G. Wyszecki and W.S. Stiles, 2^{nd} Ed., New York.

**TABLE 1**

| **Photochromatic activity and colorimetric data at 20° in methanol** | | | | | |
|---|---|---|---|---|---|
| **Photochromatic compound** | **Conc. (10**^{**-4**}**M)** | **ΔY** | **ΔL**^{*****} | **Δa**^{*****} | **Δb**^{*****} |
| (A) | 1.022 | 17.52 | -7.20 | -6.98 | -9.63 |
| (B) | 0.971 | 47.17 | -24.20 | -29.69 | -30.11 |
| (C) | 1.018 | 16.31 | -6.75 | 2.28 | -48.92 |
| (D) | 1.016 | 64.43 | -37.58 | -28.98 | -41.08 |
| (E) | 1.086 | 21.58 | -9.04 | 8.63 | 43.78 |
| (F) | 0.988 | 23.77 | -10.60 | -13.24 | -11.94 |
| (Ia) | 1.003 | 36.87 | -17.43 | -15.46 | -21.59 |
| (Ib) | 1.092 | 58.24 | -31.40 | -31.60 | -35.03 |
| (Ic) | 0.998 | 72.06 | -44.51 | -31.98 | -40.83 |
| (Id) | 1.065 | 20.71 | -9.04 | 5.85 | 61.01 |
| (Ie) | 1.012 | 35.76 | -17.02 | 17.15 | 77.37 |
| (If) | 1.162 | 40.87 | -20.13 | 26.42 | -0.85 |
| (Ig) | 1.022 | 26.83 | -12.28 | 19.21 | -0.83 |

The ΔY values indicated above in Table 1, clearly demonstrate that the Compounds (Ia)-(Ig), object of the present invention, have a higher photochromatic activity with respect to Compounds (A)-(E) known in the art.

## Claims

1. Silyl-carbamate photochromatic compounds having general formula (I): 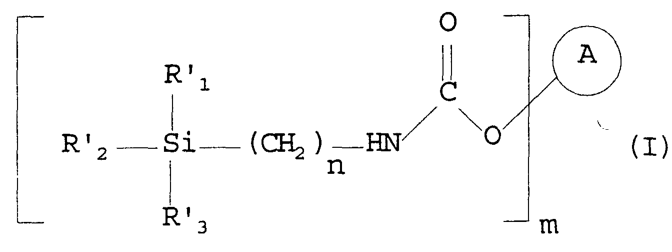 wherein:
- R'₁, R'₂ and R'₃, the same or different, represent a hydrogen atom; a linear or branched C₁-C₁₀ alkyl group, said alkyl group optionally substituted with 1-10 halogen atoms selected from fluorine, chlorine and bromine, linear or branched C₁-C₆ alkoxyl groups, carboxyl groups, cyano groups, or with an N,N-dialkyl-(C₁-C₆)-amine group, or with a cyclic amine; a vinyl group; an allyl or methallyl group; a linear or branched C₂-C₁₀ alkenyl group; a COOR'ₐ ester group wherein R'ₐ represents a linear or branched C₁-C₁₀ alkyl group; a benzyl group, said benzyl group optionally substituted with 1-5 halogen atoms selected from fluorine, chlorine and bromine, or with C(X')₃ groups wherein X' is selected from fluorine, chlorine and bromine, linear or branched C₁-C₁₀ alkyl groups, linear or branched C₁-C₆ alkoxyl groups, carboxyl groups, cyano groups, or with a 1,2,2,6,6-pentamethylpiperidine group; a linear or branched C₁-C₆ alkoxyl group; an N,N-dialkyl-(C₁-C₆)-amide group;
- n is an integer ranging from 0 to 11, extremes included;
- m is an integer ranging from 1 to 3;
- A represents a photochromatic compound having general formula (II): 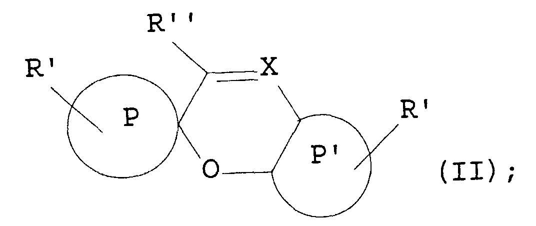
- X represents CH; or a nitrogen atom;
- R' represents a hydrogen atom; or a hydroxyl group, or a linear or branched (C₁-C₆) hydroxyalkyl group, or an ORx group wherein Rx represents a linear or branched (C₁-C₆) hydroxyalkyl group; on the condition that at least one of the R' substituents represents a hydroxyl group, or a hydroxyalkyl group, or an ORx group wherein Rx has the meaning described above;
- R'' represents a hydrogen atom; a halogen atom selected from fluorine, chlorine and bromine; a linear or branched C₁-C₆ alkyl group; a C₄-C₁₀ cycloalkyl group; a linear or branched C₁-C₆ alkoxyl group; a phenyl group optionally substituted with a linear or branched C₁-C₆ halogen-alkyl group in which the halogen atom is selected from fluorine, chlorine and bromine, a linear or branched C₁-C₆ alkoxyl group, a hydroxyl group;
- P represents one of the following groups having general formula (III), (IV), (V), (VI): 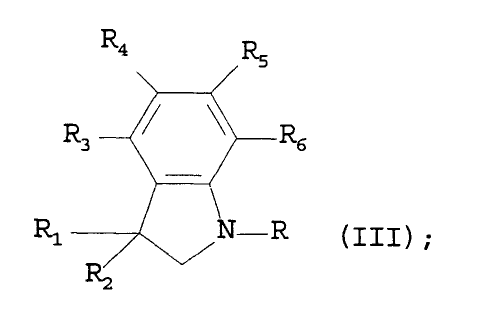 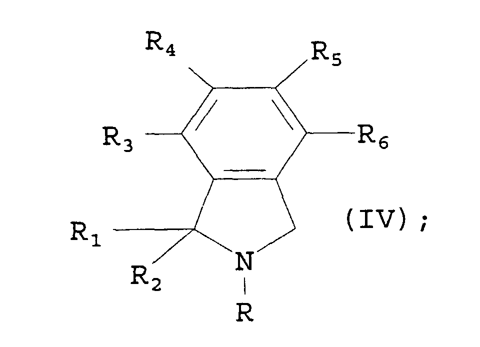 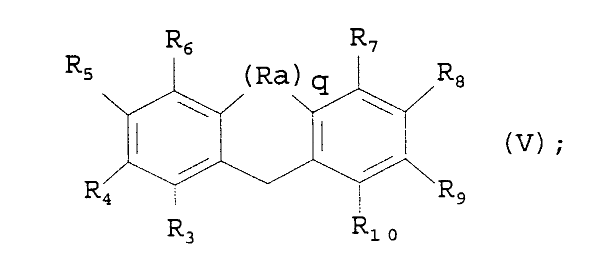 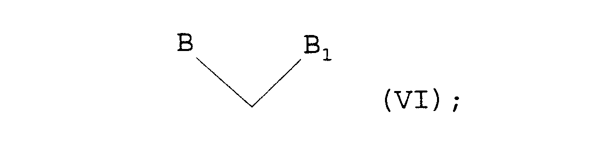
- R represents a linear or branched C₁-C₁₀ alkyl group, said alkyl group optionally substituted with 1-10 halogen atoms selected from fluorine, chlorine and bromine, linear or branched C₁-C₆ alkoxyl groups, carboxyl groups, cyano groups, or with a 1,2,2,6,6-pentamethylpiperidine group; a vinyl group; an allyl or methallyl group; a linear or branched C₂-C₆ alkenyl group; an aryl group selected from phenyl, biphenyl and naphthyl, said aryl group optionally substituted with linear or branched C₁-C₆ alkoxyl groups, carboxyl groups, N,N-dialkyl-(C₁-C₆)-amine groups; a COOR'ₐ ester group wherein R'ₐ represents a linear or branched C₁-C₁₀ alkyl group; a benzyl group, said benzyl group optionally substituted with 1-5 halogen atoms selected from fluorine, chlorine and bromine, or with C(X')₃ groups wherein X' is selected from fluorine, chlorine and bromine, linear or branched C₁-C₁₀ alkyl groups, linear or branched C₁-C₆ alkoxyl groups, carboxyl groups, cyano groups, or with a 1,2,2,6,6-pentamethylpiperidine group;
- R₁ and R₂, the same or different, represent a linear or branched C₁-C₁₀ alkyl group, said alkyl group optionally substituted with 1-10 halogen atoms selected from fluorine, chlorine and bromine, linear or branched C₁-C₆ alkoxyl groups, carboxyl groups, cyano groups, or with a 1,2,2,6,6-pentamethylpiperidine group; a vinyl group; an allyl or methallyl group; an acrylic or methacrylic group; a heteroallyl group; a linear or branched C₂-C₁₀ alkenyl group; a COOR'ₐ ester group wherein R'ₐ represents a linear or branched C₁-C₁₀ alkyl group; a benzyl group, said benzyl group optionally substituted with 1-5 halogen atoms selected from fluorine, chlorine and bromine, or with C(X')₃ groups wherein X' is selected from fluorine, chlorine and bromine, linear or branched C₁-C₁₀ alkyl groups, linear or branched C₁-C₆ alkoxyl groups, carboxyl groups, cyano groups, or with a 1,2,2,6,6-pentamethylpiperidine group; a linear or branched C₁-C₆ alkoxyl group; an N, N-dialkyl-(C₁-C₆)-amine group; or R₁ and R₂, considered jointly with the carbon atom to which they are bound, represent a C₄-C₁₀ cycloalkyl group, said cycloalkyl group optionally substituted with halogen atoms selected from fluorine, chlorine and bromine, or with hydroxyl groups, linear or branched C₁-C₆ alkoxyl groups, carboxyl groups, hydroxyl groups, cyano groups, N,N-dialkyl-(C₁-C₆)-amine groups;
- R₃, R₄, R₅, R₆, R₇, R₈, R₉ and R₁₀, the same or different, represent a hydrogen atom; a halogen atom selected from fluorine, chlorine, bromine and iodine; a linear or branched C₁-C₆ alkyl group, said alkyl group optionally substituted with 1-6 halogen atoms selected from fluorine, chlorine and bromine, linear or branched C₁-C₆ alkoxyl groups, carboxyl groups, hydroxyl groups, cyano groups, or with a 1,2,2,6,6-pentamethylpiperidine group; a benzyl group, said benzyl group optionally substituted with 1-5 halogen atoms selected from fluorine, chlorine and bromine, or with C(X')₃ groups wherein X' is selected from fluorine, chlorine and bromine, linear or branched C₁-C₁₀ alkyl groups, linear or branched C₁-C₆ alkoxyl groups, carboxyl groups, cyano groups, or with a 1,2,2,6,6-pentamethylpiperidine group; a hydroxyl group; a linear or branched C₁-C₆ alkoxyl group, said alkoxyl group optionally substituted with hydroxyl groups; an N,N-dialkyl-(C₁-C₆)-amine group; a piperidine, piperazine or morpholine group; a C₁-C₆ carboxyalkyl group; a C₂-C₆ carboxyalkenyl group;a carboxyamide group; an N-alkyl-(C₁-C₆)-carboxyamide group; an N,N-dialkyl- (C₁-C₆)-carboxyamide group; a cyano group; a nitro group; a sulfonic group; an aryl group selected from phenyl, diphenyl and naphthyl, said aryl group optionally substituted with N,N-dialkyl-(C₁-C₆)-amine groups, linear or branched C₁-C₆ alkoxyl groups, hydroxyl groups, linear or branched C₁-C₆ alkyl groups; an acyl group of the alkyl ketone, aryl ketone or benzyl ketone type; a vinyl group; an allyl or methallyl group; an acrylic or methacrylic group; a heteroallyl group; a linear or branched C₂-C₆ alkenyl group, said alkenyl group optionally substituted with one or two N,N-dialkyl-(C₁-C₆)-4-aniline groups; an N-2,3-dihydroindoline group; a linear or branched C₁-C₆ thioether group;
- two consecutive substituents between R₃ and R₁₀ can represent the condensation points with other aromatic, heterocyclic or quinonic rings;
- Ra represents a methylene group; a vinylene group; a carbon-carbon bond;
- q is 0, 1 or 2;
- B and B₁ are selected from the following groups: (i) aryl, phenyl and naphthalene groups, said aryl, phenyl and naphthalene groups being optionally mono-, di- or tri-substituted; (ii) heterocyclic aromatic groups such as pyridyl, furanyl, benzofuran-2-yl, benzofuran-3-yl, thienyl, benzothien-2-yl, benzothien-3-yl, said heterocyclic aromatic groups being optionally mono- or di-substituted; said aryl, phenyl, naphthalene and heterocyclic aromatic groups being optionally substituted with hydroxyl groups, piperidine groups, morpholine groups, pyrrole groups, linear or branched C₁-C₆ alkyl groups, linear or branched C₁-C₆ chloro-alkyl groups, linear or branched C₁-C₆ fluoro-alkyl groups, linear or branched C₁-C₆ alkoxyl groups optionally substituted with hydroxyl groups, linear or branched C₁-C₄ alkyl groups substituted with hydroxyl groups, linear or branched C₁-C₆ alkoxyl groups, acryloxyl groups, methacryloxyl groups, halogen atoms selected from chlorine and fluorine; (iii) groups represented by the following general formulae (VII) and (VIII): 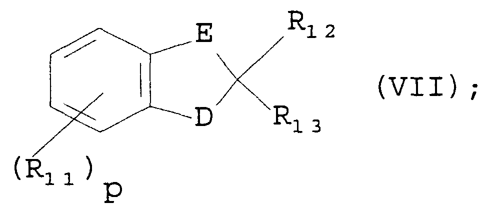 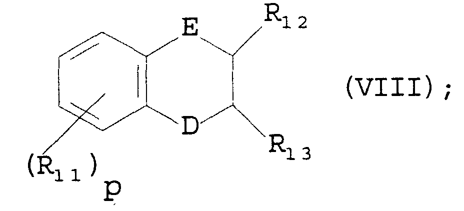 wherein E represents a carbon atom or an oxygen atom; D represents an oxygen atom or a substituted nitrogen atom, on the condition that, when D represents a substituted nitrogen atom, E represents a carbon atom, said nitrogen atom being substituted with linear or branched C₁-C₆ alkyl groups, or with C₂-C₆ acyl groups; R₁₁ represents a linear or branched C₁-C₆ alkyl group, a linear or branched C₁-C₆ alkoxyl group, a hydroxyl group, a halogen atom selected from chlorine and fluorine; R₁₂ and R₁₃, each independently, represent a hydrogen atom, a linear or branched C₁-C₆ alkyl group, p is 0, 1 or 2; (iv) linear or branched C₁-C₆ alkyl groups, linear or branched C₁-C₆ chloro-alkyl groups, linear or branched C₁-C₆ fluoro-alkyl groups, linear or branched C₁-C₄ alkyl groups substituted with linear or branched C₁-C₆ alkoxyl groups, C₃-C₆ cycloalkyl groups optionally mono-substituted with a linear or branched C₁-C₆ alkoxyl group or with a linear or branched C₁-C₆ alkyl group, or with a halogen atom selected from chlorine and fluorine; (v) a group having general formula (IX): 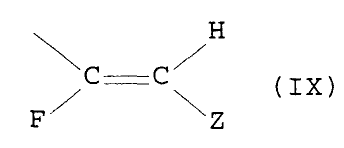 wherein F represents a hydrogen atom, a linear or branched C₁-C₄ alkyl group; and Z is selected from the following groups: naphthyl, phenyl, furanyl, thienyl, said naphthyl, phenyl, furanyl and thienyl groups, optionally mono- or di-substituted with linear or branched C₁-C₄ alkyl groups, linear or branched C₁-C₄ alkoxyl groups, halogen atoms selected from fluorine and chlorine; (vi) or, B and B₁, considered jointly, represent a fluoren-9-ylidene group, said fluoren-9-ylidene group optionally mono- or di-substituted with linear or branched C₁-C₄ alkyl groups optionally substituted with hydroxyl groups, linear or branched C₁-C₄ alkoxyl groups optionally substituted with hydroxyl groups, hydroxyl groups, halogen atoms selected from fluorine and chlorine, or they represent a group selected from spiro-monocyclic C₃-C₁₂ saturated hydrocarbon rings such as, for example, cyclopropylidene, cyclobutylidene, cyclopentylidene, cyclohexylidene, cycloheptylidene, cyclooctylidene, cyclononylidene, cyclodecylidene, cycloundecylidene, cyclododecylidene; spiro-bicyclic C₇-C₁₂ saturated hydrocarbon rings such as bicyclo[2.2.1]-heptylidene (norbornylidene), 1,7,7-trimethyl-bicyclo [2.2.1]heptylidene (bornylidene), bicyclo[3.2.1]-octylidene, bicyclo[3.3.1]-nonan-9-ylidene, bicyclo[4.3.2]-undecane; spirotricyclic C₇-C₁₂ saturated hydrocarbon rings such as tricyclo[2.2.1.0^{2,6}]heptylidene, tricyclo [3.3.1.1^{3,7}] decylidene, (adamantylidene), tricyclo [5.3.1.1^{2,6}] dodecylidene;
- P' represents a monocyclic or polycyclic aromatic nucleus, belonging to one of the following types: benzenic represented by general formula (X); naph-thalenic represented by general formula (XI); quinolinic represented by general formula (XII); isoquinolinic represented by general formula (XIII); cumarinic represented by general formula (XIV); quinazolinic represented by general formula (XV); phenanthrenic represented by general formula (XVI); anthracenic represented by general formula (XVII); dibenzoheterocyclic represented by general formula (XVIII); naphtho-indenic represented by general formula (XIX): 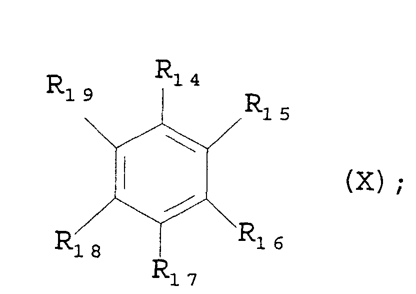 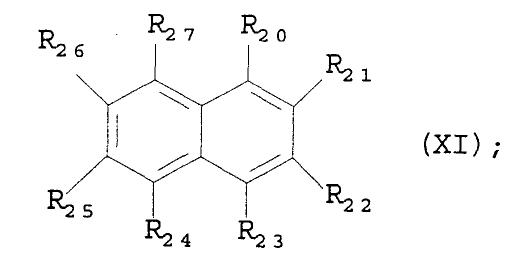 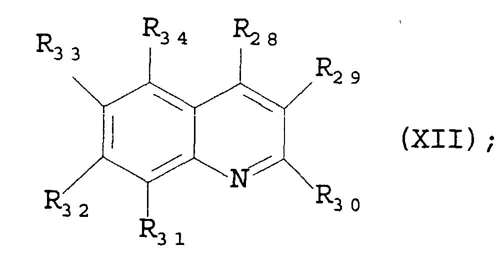 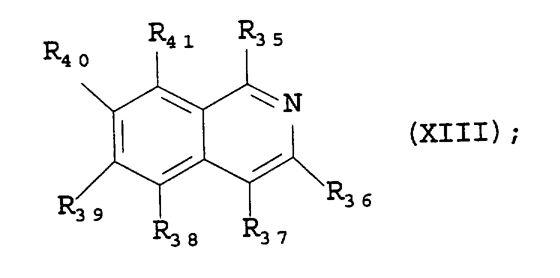 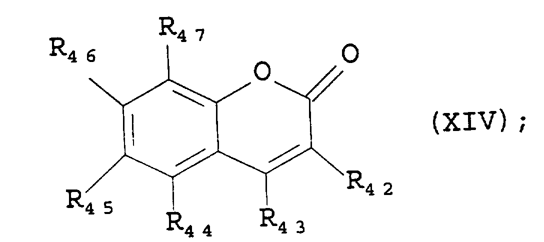 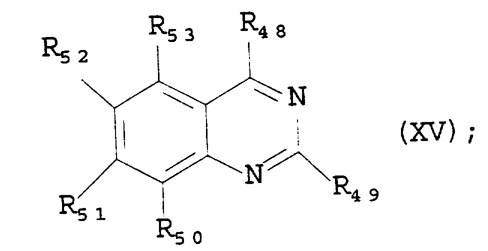 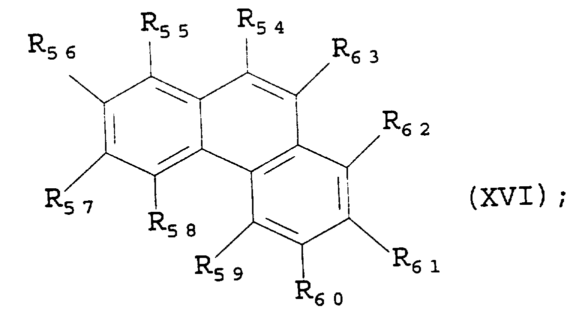 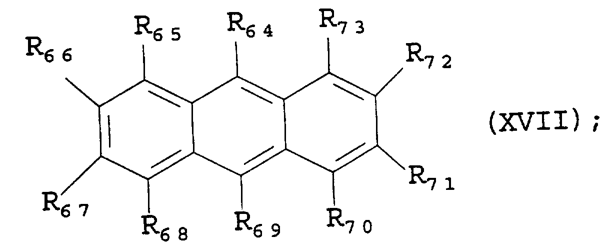 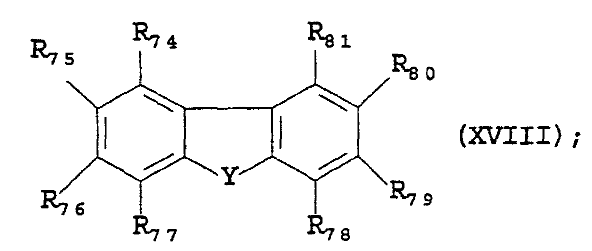 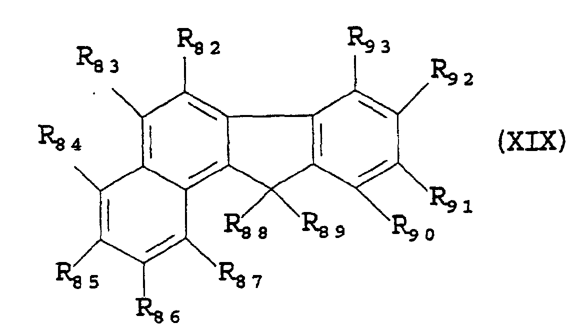 wherein:
(a) at least two consecutive substituents between R₁₄ and R₁₉, R₂₀ and R₂₇, R₂₈ and R₃₄, R₃₅ and R₄₁, R₄₂ and R₄₇, R₅₀ and R₅₃, R₅₄ and R₆₃, R₆₄ and R₇₃, R₇₄ and R₈₁, R₈₂ and R₈₇, R₉₀ and R₉₃, represent the condensation points with the oxazine or pyran ring;
(b) R₈₈ and R₈₉, considered jointly, represent an oxygen atom (or a carbonyl group); a spiro-heterocyclic group containing two oxygen atoms and from 3 to 6 carbon atoms including the spiro carbon atom (which can be represented as follows: -O-(C₂-C₅)-O- such as 1,3-spiro-2-dioxolane, 1,3-spiro-2-di-oxane, or, R₈₈ and R₈₉, each independently, represent a hydrogen atom, a hydroxyl group, a linear or branched C₁-C₆ alkyl group, a C₃-C₇ cycloalkyl group, an allyl group, a phenyl group optionally mono-substituted with a linear or branched C₁-C₆ alkyl group, or with a linear or branched C₁-C₆ alkoxyl group, a benzyl group optionally mono-substituted with a linear or branched C₁-C₆ alkyl group, or with a linear or branched C₁-C₆ alkoxyl group, a halogen atom selected from chlorine and fluorine, a -C(O)W group wherein W represents a hydroxyl group, a linear or branched C₁-C₆ alkyl group, a linear or branched C₁-C₆ alkoxyl group, a phenyl group optionally mono-substituted, an N,N-(C₁-C₆)-alkylamine group such as dimethyl amine, methyl propyl amine; or, R₈₈ and R₈₉, each independently, represent an -OR_{b} group wherein R_{b} represents a linear or branched C₁-C₆ alkyl group, a phenyl-(C₁-C₃)-alkyl group optionally mono-substituted with a linear or branched C₁-C₆ alkyl group, or with a linear or branched C₁-C₆ alkoxyl group, a linear or branched C₂-C₄ alkyl group optionally substituted with a linear or branched C₁-C₆ alkoxyl group, a C₃-C₇ cycloalkyl group optionally mono-substituted with a linear or branched C₁-C₄ alkyl group, a linear or branched C₁-C₆ alkyl group substituted with a halogen atom selected from chlorine and fluorine, an allyl group, a -CH(R_{c})G group wherein R_{c} represents a hydrogen atom, or a linear or branched C₁-C₃ alkyl group, G represents CN, CF₃, or a COOR_{d} group wherein R_{d} represents a hydrogen atom, or a linear or branched C₁-C₃ alkyl group, or R_{b} represents a -C(O)J group wherein J represents a hydrogen atom, a linear or branched C₁-C₆ alkyl group, a linear or branched C₁-C₆ alkoxyl group, a phenyl, aryl, naphthyl group, said aryl, phenyl and naphthyl groups optionally mono- or di-substituted with linear or branched (C₁-C₆) alkyl groups or with linear or branched (C₁-C₆) alkoxyl groups, a phenoxyl group optionally mono- or di-substituted with linear or branched (C₁-C₆) alkyl groups or with linear or branched (C₁-C₆) alkoxyl groups, an N,N-(C₁-C₆)-alkylamine group, a phenylamine group;
- the other substituents from R₁₄ to R₄₀ have the same meaning described for the substituents R₃, R₄, R₅, R₆, R₇, R₈, R₉ and R₁₀;
- Y represents a CH₂ group; an oxygen atom; a sulfur atom; a selenium atom; an N(Rₑ) group wherein Rₑ represents a linear or branched C₁-C₆ alkyl group.

2. The silyl-carbamate photochromatic compounds having general formula (I) according to claim 1, wherein:
- R'₁, R'₂ and R'₃ represent an ethoxyl or methoxyl group;
- n is 3;
- m is 1;
- A represents a photochromatic compound having general formula (II) wherein:
- X represents a nitrogen atom; or CH;
- at least one of the R' substituents must be a hydroxyl group or a 2-hydroxyethoxyl group (-O-CH₂CH₂OH), or a hydroxyalkyl group such as (-CH₂OH) or (-CH₂CH₂OH) ;
- R" represents a hydrogen atom, a chlorine atom, a bromine atom, a methyl or a phenyl group;
- P represents one of the groups having general formula (III), (IV), (V) or (VI) wherein:
- R represents one of the following groups: methyl, ethyl, isopropyl, 2-allyl, 2-methallyl, 2-hydroxyethyl, 2-carboxymethyl, phenyl, 4-N,N-dimethylaminoaniline, 4-methoxybenzene, 4-cyanobenzene;
- R₁ and R₂, the same or different, represent a methyl or phenyl group; or, considered jointly with the carbon atom to which they are bound, represent a cyclohexyl group;
- R₃, R₄, R₅, R₆, R₇, R₈, R₉ and R₁₀, the same or different, represent a hydrogen atom, a fluorine atom, a chlorine atom, a bromine atom, or one of the following groups: methyl, isopropyl, hydroxyl, 2-hydroxyethyl, methoxyl, N,N-dimethylamine, piperidine, morpholine, carboxyl, carboxymethyl, N,N-dimethylcarboxyamide, cyano, nitro, methylketone, phenylketone, phenyl;
- Rₐ represents a carbon-carbon bond;
- q is 0
- B and B₁, each independently, are selected from the following groups: (i) phenyl groups optionally mono- or di-substituted; (ii) heterocyclic aromatic groups such as, furanyl, benzofuran-2-yl, thienyl, benzothien-2-yl, said heterocyclic aromatic groups optionally mono- or di-substituted; said phenyl and heterocyclic aromatic groups being optionally substituted with hydroxyl groups, linear or branched C₁-C₃ alkyl groups, C₁-C₂ hydroxyalkyl groups, linear or branched C₁-C₃ alkoxyl groups, halogen atoms selected from chorine and fluorine; (iii) groups represented by general formula (VII) wherein E represents a carbon atom, D an oxygen atom; R₁₁ represents a linear or branched C₁-C₃ alkyl group, a linear or branched C₁-C₃ alkoxyl group; R₁₂ and R₁₃, each independently, represent a hydrogen atom, a linear or branched C₁-C₃ alkyl group; p is 0 or 1; (vi) or, B and B' considered jointly, represent a fluoren-9-ylidene group, or a group selected from: adamantylidene, bornylidene, norbornylidene, bicyclo[3.3.1] nonan-9-ylidene;
- P' represents one of the groups having general formula from (X) to (XIX), wherein:
(a) two consecutive substituents between R₁₄ and R₁₉, R₂₀ and R₂₇, R₂₈ and R₃₄, R₃₅ and R₄₁, R₄₂ and R₄₇, R₅₀ and R₅₃, R₅₄ and R₆₃, R₆₄ and R₇₃, R₇₄ and R₈₁, R₈₂ and R₈₇, R₉₀ and R₉₃, independently represent the condensation points with the oxazine or pyran ring; and the other substituents, each independently, represent a hydrogen atom, a fluorine atom, a chlorine atom, a bromine atom, or one of the following groups: methyl, isopropyl, hydroxyl, methoxyl, hydroxymethyl, 2-hydroxyethyl, 2-allyl, piperidine, morpholine, N,N-dimethylamine, carboxyl, carboxymethyl, N,N-dimethylcarboxyamide, cyano, nitro, methylketone, ethylketone, phenylketone, methylthiol;
(b) two consecutive substituents between R₁₄ and R₁₉, R₂₀ and R₂₇, R₂₈ and R₃₄, R₃₅ and R₄₁, R₄₂ and R₄₇, R₅₀ and R₅₃, R₅₄ and R₆₃, R₆₄ and R₇₃, R₇₄ and R₈₁, R₈₂ and R₈₇, R₉₀ and R₉₃, different from those indicated under point (a), represent the condensation points with a benzene or quinone ring;
- R₈₈ and R₈₉, each independently, represent a hydrogen atom, a hydroxyl group, a linear or branched C₁-C₄ alkyl group, a C₃-C₆ cycloalkyl group, a halogen atom selected from chlorine and fluorine, an -OR_{b} group, wherein R_{b} represents a linear or branched C₁-C₃ alkyl group, a phenyl-(C₁-C₂)-alkyl group, a phenyl-(C₁-C₃)-alkyl group mono-substituted with a linear or branched C₁-C₃ alkyl group, a phenyl-(C₁-C₃)-alkyl group mono-substituted with a linear or branched C₁-C₃ alkoxyl group, a C₂-C₄ alkyl group substituted with a linear or branched C₁-C₃ alkoxyl group, a linear or branched C₁-C₃ chlorine- or fluorine-alkyl group, a -CH(R_{c})G group, wherein R_{c} represents a hydrogen atom, or a linear or branched C₁-C₂ alkyl group, G represents CN, or a COOR_{d} group wherein R_{d} represents a hydrogen atom, or a linear or branched C₁-C₃ alkyl group, or R_{b} represents a -C(O)J group wherein J represents a hydrogen atom, a linear or branched C₁-C₃ alkyl group, a linear or branched C₁-C₃ alkoxyl group, a phenyl group, a naphthyl group, a phenoxyl group, a phenyl, aryl, naphthyl or phenoxyl group mono- or di-substituted with a linear or branched C₁-C₃ alkyl group, or with a linear or branched C₁-C₃ alkoxyl group, a phenylamine group; or R₈₈ and R₈₉, each independently, represent a hydrogen atom, a hydroxyl group, a linear or branched C₁-C₄ alkyl group, an -OR_{b} group, wherein R_{b} represents a linear or branched C₁-C₃ alkyl group;
- Y represents a CH₂ group, an oxygen atom, an N(Rₑ) group wherein Rₑ represents a linear or branched C₁-C₆ alkyl group.

3. A silyl-carbamate photochromatic compound having general formula (I) according to claim 1 or 2, corresponding to Compound (Ia):

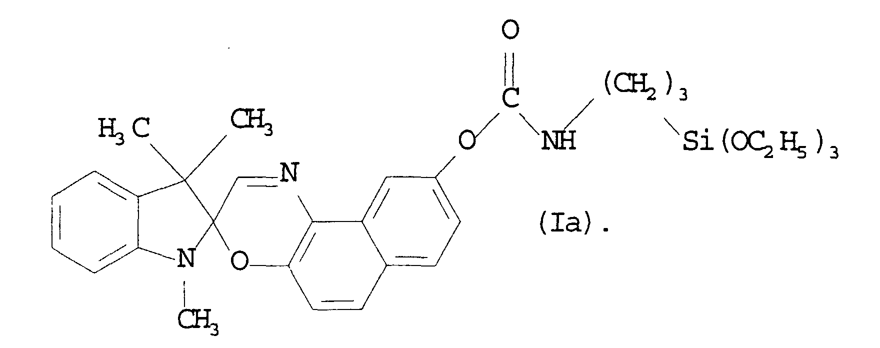

4. A silyl-carbamate photochromatic compound having general formula (I) according to claim 1 or 2, corresponding to Compound (Ib):

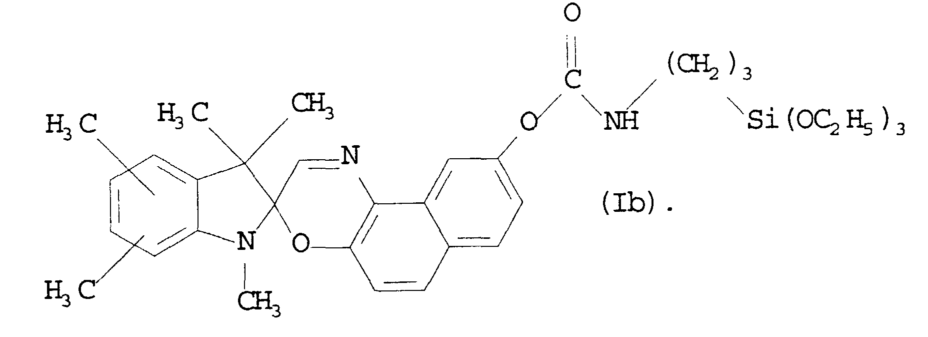

5. A silyl-carbamate photochromatic compound having general formula (I) according to claim 1 or 2, corresponding to Compound (Ic):

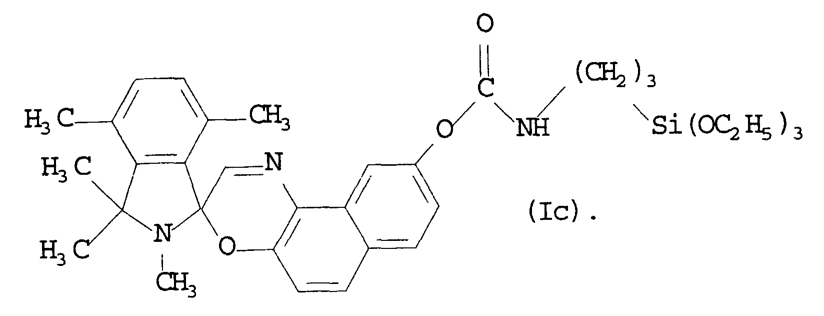

6. A silyl-carbamate photochromatic compound having general formula (I) according to claim 1 or 2, corresponding to Compound (Id):

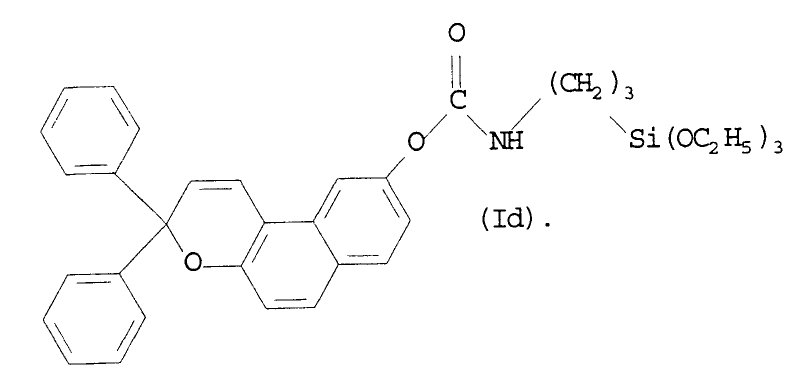

7. A silyl-carbamate photochromatic compound having general formula (I) according to claim 1 or 2, corresponding to Compound (Ie):

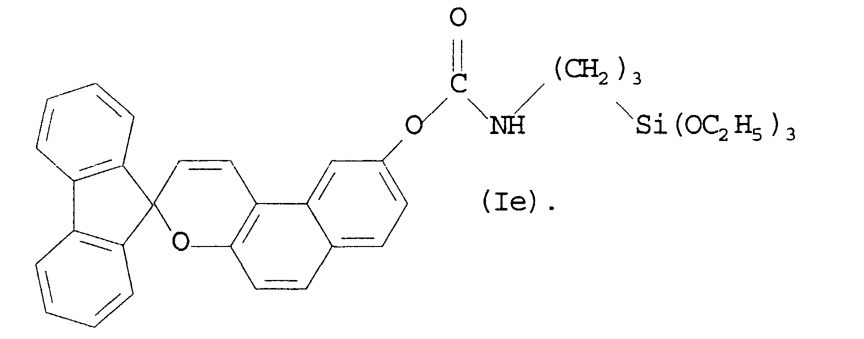

8. A silyl-carbamate photochromatic compound having general formula (I) according to claim 1 or 2, corresponding to Compound (If):

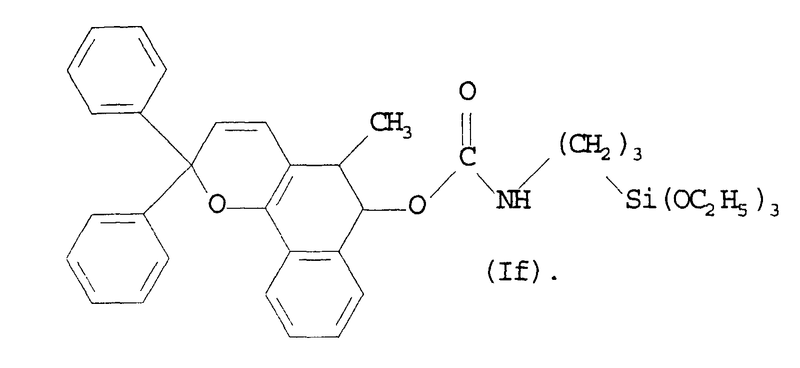

9. A silyl-carbamate photochromatic compound having general formula (I) according to claim 1 or 2, corresponding to Compound (Ig):

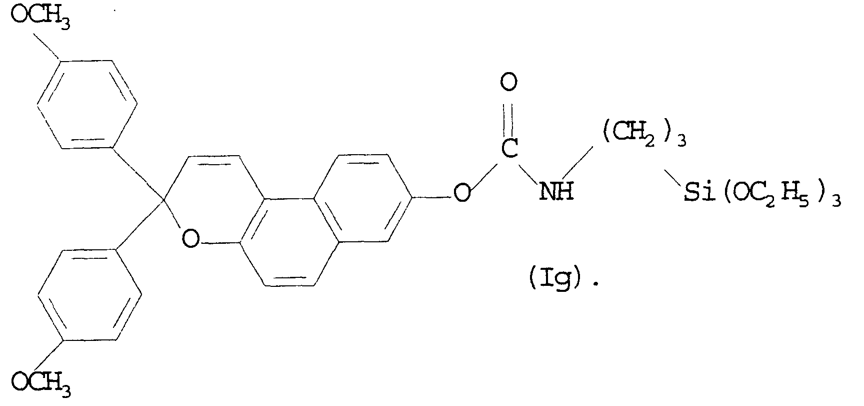

10. A process for the preparation of the silyl-carbamate photochromatic compounds having general formula (I) according to any of the previous claims from 1 to 9, comprising the addition reaction of photochromatic compounds having general formula (II): 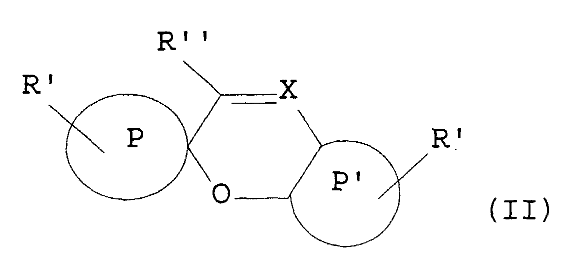 wherein at least one of the R' substituents represents a hydroxyl group or a 2-hydroxyethoxyl group, or a C₁-C₂ hydroxyalkyl group, and, R'', P, P' and Y have the same meanings described above, with isocyanates having general formula (XX): 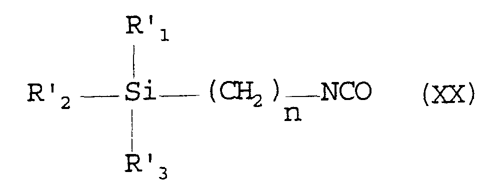 wherein R'₁, R'₂, R'₃ and n have the same meanings defined above, in the presence of an inert organic solvent and a tertiary amine as catalyst, at a temperature ranging from 50°C to 100°C, for a time ranging from 1 hour to 15 hours.

11. The process according to claim 10, wherein the inert organic solvent is selected from acetone and toluene.

12. The process according to claim 10, wherein the tertiary amine is triethylamine.

13. The process according to claim 10, wherein the temperature ranges from 60°C to 80°C.

14. The process according to claim 10, wherein the reaction time ranges from 1 to 6 hours.

15. The process for the preparation of silyl-carbamate photochromatic compounds having general formula (I) according to any of the claims from 1 to 9, comprising the addition reaction of isocyanates having general formula (XX) with indoline compounds having general formula (XXI), or with isoindoline compounds having general formula (XXII), or with compounds deriving from α,β-unsaturated aldehydes having general formula (XXIV), or with nitroso compounds or aldehyde compounds having general formula (XXV), or with hydroxy-aryl compounds having general formula (XXVI), to give the respective photochromatic compounds having general formula (XXIb), (XXIIb), (XXIVa), (XXIVb), (XXVa) and (XXVIa) indicated in Schemes 5-9: 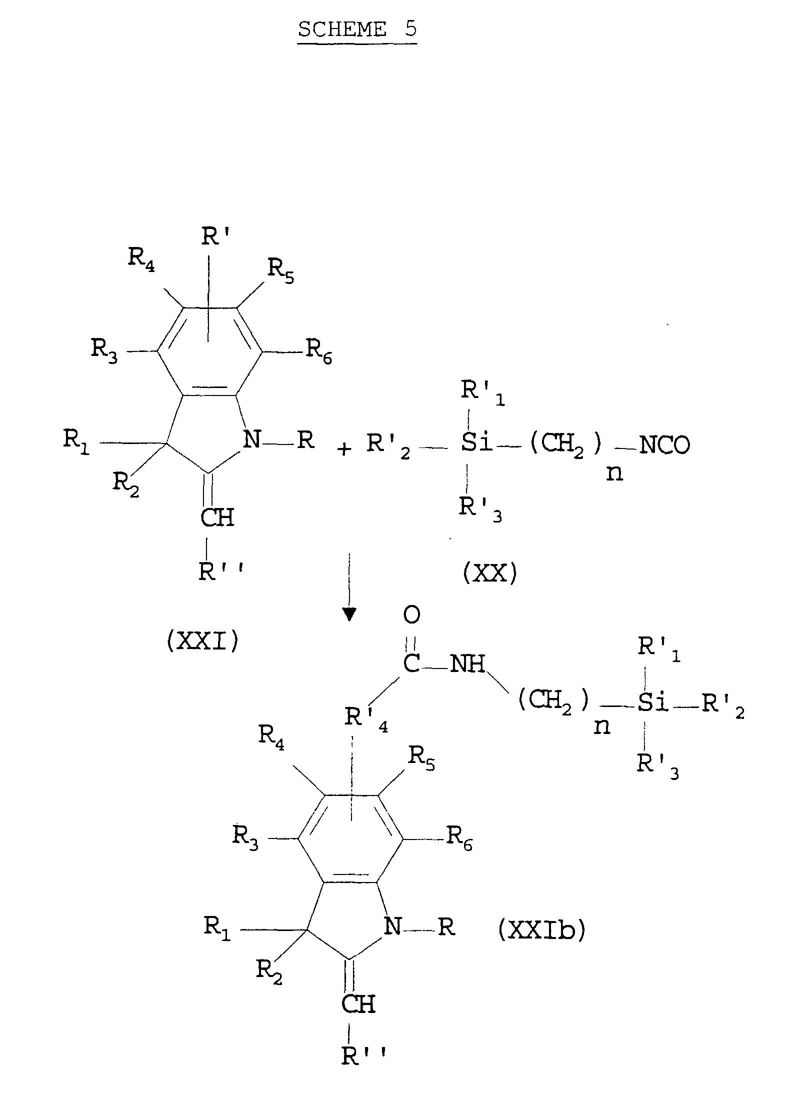 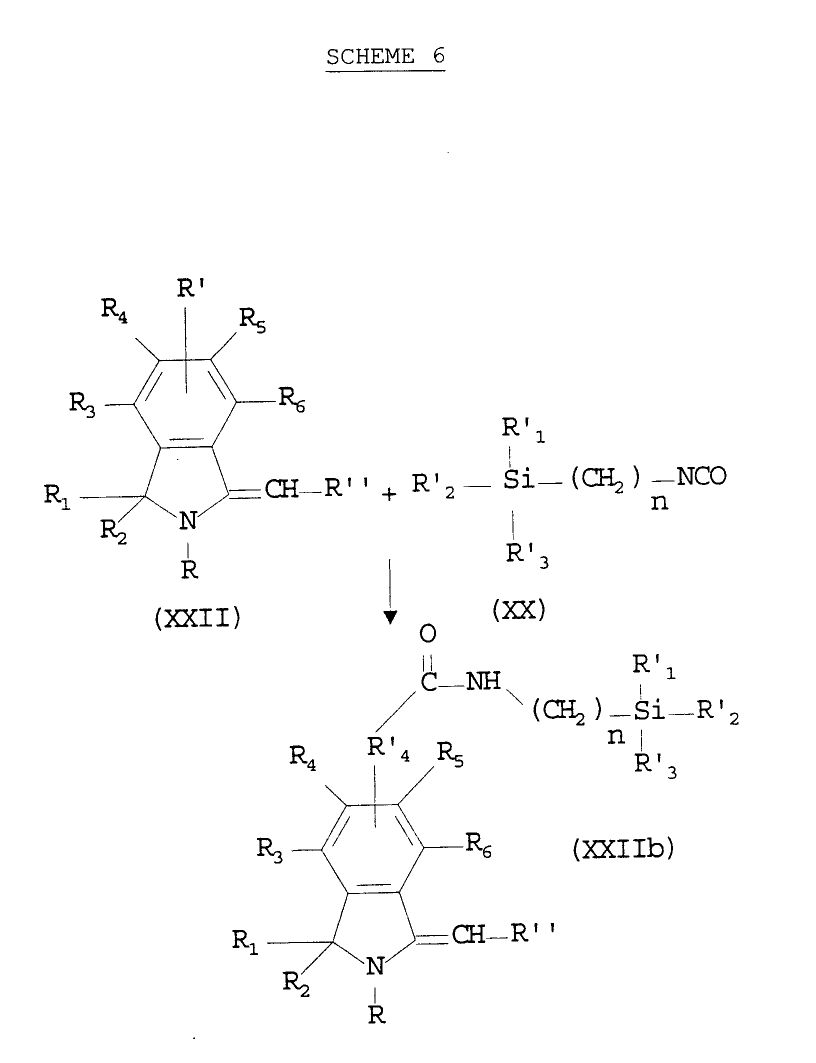 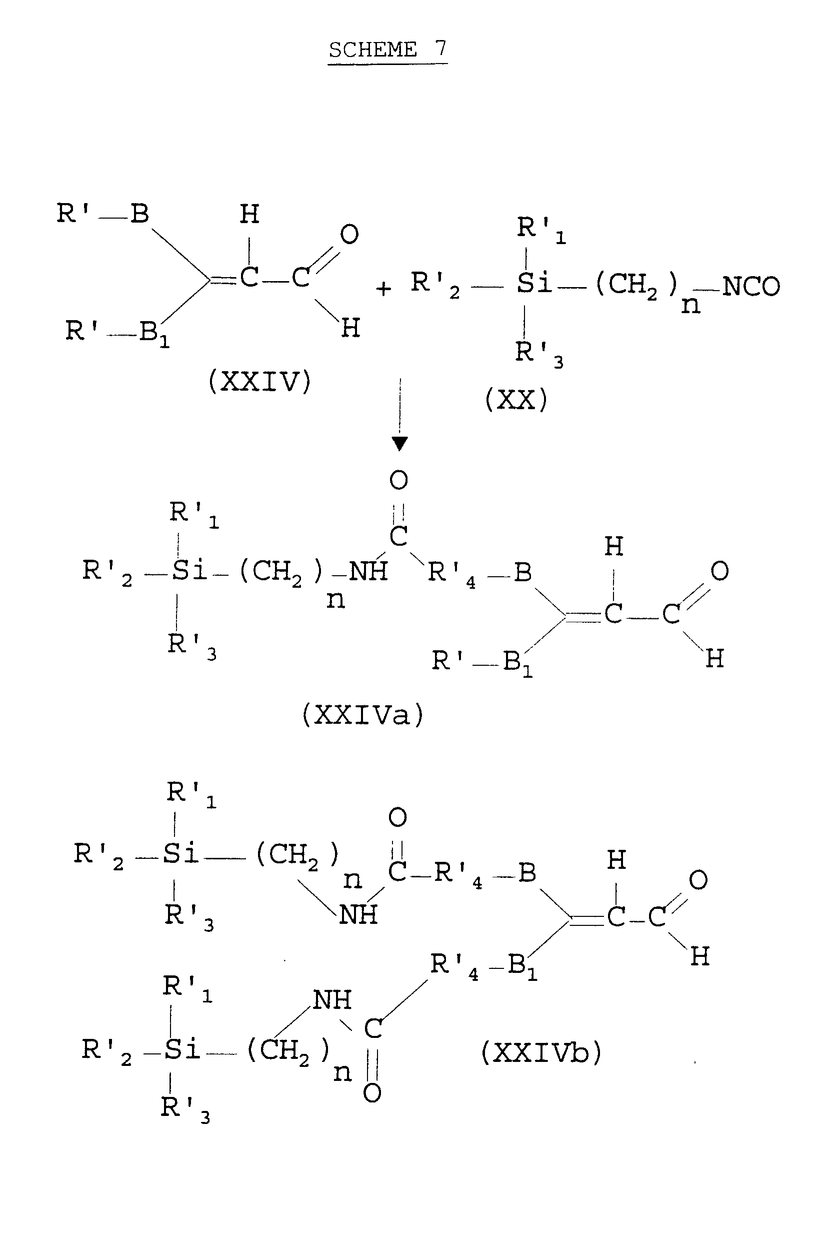 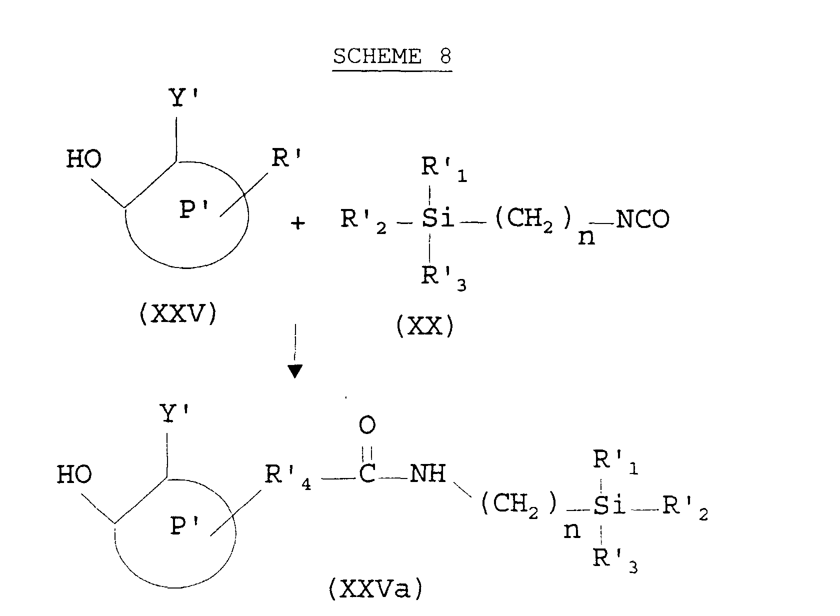 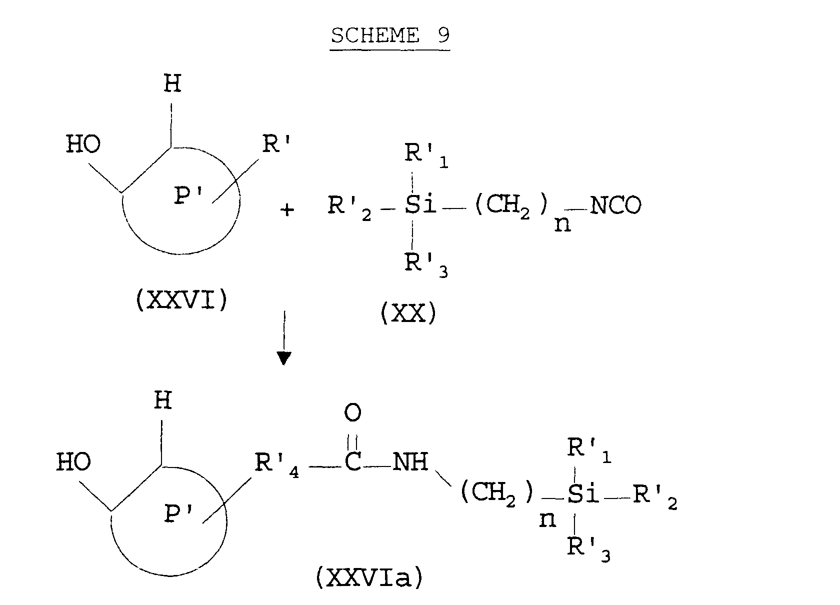 wherein the R substituents, from R₁ to R₆, B and B₁, R', R'', Y, Y' and P', have the same meanings described above and R'₄ represents an oxygen atom, a linear or branched (C₁-C₆) alkoxyl group, an ORₓ group wherein Rₓ represents a linear or branched (C₁-C₆) alkoxyl group; and, subsequently, the:
- condensation of the silylated compounds having general formula (XXIb) and (XXIIb) obtained according to Schemes 5 and 6 with the silylated compounds having general formula (XXVa) obtained according to Scheme 8, obtaining di-silylated photochromatic compounds having general formula (I);
- condensation of the silylated compounds having general formula (XXIVa) or (XXIVb) obtained according to Scheme 7 with the silylated compounds having general formula (XXVIa) obtained according to Scheme 9, obtaining di- and tri-silylated photochromatic compounds having general formula (I);
- condensation of the silylated compounds having general formula (XXIb) and (XXIIb) obtained according to Schemes 5 and 6 with the nitroso compounds or aldehyde compounds having general formula (XXV) described above, obtaining mono-and di-silylated photochromatic compounds having general formula (I);
- condensation of the silylated compounds having general formula (XXIVa) or (XXIVb) obtained according to Scheme 7 with the hydroxy-aryl compounds having general formula (XXVI) described above, obtaining mono- and di-silylated photochromatic compounds having general formula (I).

16. The process according to claim 15, wherein the addition reaction is carried out under the operating conditions according to claims from 10 to 14.

17. The process according to claim 15, wherein the condensation reaction is carried out in the presence of an inert organic solvent, or a mixture of said solvents, and in the presence of an amine, or an acid, or a metal complex, at a temperature ranging from 50°C to 100°C, for a time ranging from 1 hour to 10 hours.

18. The process according to claim 17, wherein the inert organic solvent is ethyl alcohol, isopropanol, toluene.

19. The process according to claim 17, wherein the amine is triethylamine, methylmorpholine, piperidine.

20. The process according to claim 17, wherein the acid is paratoluenesulfonic acid, sulfuric acid, acid alumina.

21. The process according to claim 17, wherein the metal complex is titanium(IV)tetra-ethoxide.

22. The process according to claim 17, wherein the temperature ranges from 60°C to 75°C.

23. The process according to claim 17, wherein the time ranges from 2 hours to 3 hours.

24. Polymeric compositions comprising at least one silyl-carbamate photochromatic compound according to any of the claims from 1 to 23, and at least one organic polymer selected from high density polyethylene, low density polyethylene, ethylene-vinylacetate copolymer, polyether amides, polypropylene, polymethylmethacrylate, polyvinyl alcohol, polyvinyl butyral, acetate butyrate of cellulose, epoxy, polysiloxane or urethane resins, polycarbonate, polydiethylene glycol bis(allyl carbonate), polyamides, polyesters, polystyrene, polyvinyl chloride, polyethylacrylate, siliconic polymers.

25. Coating compositions, such as paints, lacquers, paints or lacquers based on hybrid polysiloxanes and/or silica gel, compositions based on plastic materials, comprising one or more of the silyl-carbamate photochromatic compounds having general formula (I) according to any of the claims from 1 to 23.

26. The compositions according to claim 24 or 25, comprising additives for organic polymers selected from phenol antioxidants, sterically hindered amines, benzotriazoles, benzophenones, phosphites or phosphonites.

27. Photochromatic articles obtained from the processing of the compositions according to the claims 24, 25 or 26.

28. Mixtures comprising at least one silyl-carbamate photochromatic compound having general formula (I) according to any of the claims from 1 to 23 and at least one photochromatic compound belonging to the group of spiro-indolino-oxazines or spiro-pyrans.
